# EUROPÄISCHE PATENTSCHRIFT

(11) **EP 4 183 719 B1**
(45) Veröffentlichungstag und Bekanntmachung des Hinweises auf die Patenterteilung: **10.07.2024**
(21) Anmeldenummer: 23151370.6
(22) Anmeldetag: 19.12.2017
(51) Int. Cl.: B65G 1/137, G07F 17/12, G06Q 10/08, B65G 67/02, G06Q 10/087, G06Q 10/0836

(54) **VERFAHREN UND ABGABESTATION ZUR VERTEILUNG VON WAREN**
METHOD AND DISPENSING STATION FOR DISTRIBUTING ARTICLES
PROCÉDÉ ET STATION DE DISTRIBUTION POUR LA DISTRIBUTION DE MARCHANDISES

(30) Priorität: 21.12.2016 AT 511722016
(43) Veröffentlichungstag der Anmeldung: 24.05.2023
(62) Teilanmeldung aus: 17835792.7
(73) Patentinhaber: TGW Logistics Group GmbH, 4614 Marchtrenk (AT)
(72) Erfinder: SCHEDLBAUER, Michael, 94491 Hengersberg (DE); SCHRÖPF, Harald Johannes, 4600 Wels (AT)
(74) Vertreter: Burger, Hannes

(56) Entgegenhaltungen:
- DE-A1- 102005 032 533
- DE-A1- 19 716 138
- FR-A1- 2 675 130
- US-B1- 9 120 624

## Beschreibung

Die Erfindung betrifft ein Verfahren zur Verteilung von Waren, bei dem zu einem Auftrag gehörende Waren in zumindest ein Regalfach eines Regals kommissioniert werden und das Regal in eine Übergabeposition in einem ersten Warenlagerbereich einer Abgabestation transportiert wird oder dort angeordnet ist, wobei das zumindest eine Regalfach in der Übergabeposition des Regals durch eine verschließbare Öffnung in einer ersten Trennwand der Abgabestation zugänglich ist. Weiterhin betrifft die Erfindung eine Abgabestation zur Verteilung von Waren, welche einen ersten Warenlagerbereich, einen Kundenzugangsbereich sowie eine erste Trennwand, welche den ersten Warenlagerbereich und den Kundenzugangsbereich voneinander trennt und zumindest eine verschließbare Öffnung aufweist, umfasst. Weiterhin umfasst die Abgabestation ein Warenabgabesystem, welches dazu ausgebildet ist, eine Anforderung zur Übernahme der Waren durch eine Person oder einer der Person zugeordneten Maschine entgegenzunehmen und die zumindest eine verschließbare Öffnung freizugeben, wenn die besagte Person oder die besagte Maschine für die Übernahme der Waren berechtigt ist.

Ein solches Verfahren und eine solche Abgabestation sind aus dem Stand der Technik grundsätzlich bekannt. Beispielsweise werden mobile Regale von Versandhäusern eingesetzt, um den Kommissioniervorgang zu unterstützen. Dabei werden Waren zumeist sortenrein und nicht auftragsbezogen in ein Regal abgelegt und die zu einem Auftrag gehörenden Waren aus dem Regal in einen Versandkarton kommissioniert.

Ein Beispiel für eine Abgabestation der oben genannten Art ist eine Paketstation, wie aus der US 9,120,624 B1 bekannt. In dieser werden Waren hinter verschlossenen Schiebetüren gesichert abgelegt. Ein Warenabgabesystem nimmt eine Anforderung zur Übernahme der Waren entgegen, beispielsweise über einen Scanner oder eine Eingabetastatur, und gibt die den Waren zugeordnete Schiebetür frei, wenn eine Berechtigung zur Übernahme der Waren vorliegt.

Bekannt sind auch Abgabestationen, welche mit einem Regalbediengerät (RBG) ausgestattet sind, das die angeforderten Waren aus einem fixen Regal entnimmt und zu einer Ausgabestelle befördert, wenn eine Berechtigung zur Übernahme der Waren vorliegt. Häufig weist eine solche Abgabestation dann nur eine Tür an der Ausgabestelle auf, die für die Übernahme der Waren geöffnet wird. Es können prinzipiell aber auch mehrere Regalbediengeräte und/oder Ausgabestellen vorgesehen sein.

Die aus dem Stand der Technik bekannten Systeme weisen einige Nachteile auf:
- Die bekannte Vorgangsweise ist an die Verwendung von Ladehilfsmitteln, insbesondere an die Verwendung von Versandbehältern, gebunden, in denen die zu einem Auftrag gehörenden Waren zusammengefasst werden.
- Bei der bekannten Vorgangsweise und dem bekannten System muss sehr häufig der gesamte Auftrag und damit das Gesamtgewicht des Auftrags manipuliert werden, beispielsweise beim Beladen eines Lastkraftwagens der die im Versandkarton befindlichen Waren vom Versandzentrum abtransportiert, beim Entladen an einem lokalen Verteilzentrum, beim Beladen eines Lastkraftwagens der die Lieferung durchführt oder auch beim Beladen einer Paketstation. Dies ist für die Personen, welche diese Arbeiten durchführen, ermüdend und auf Dauer gesundheitsschädlich.
- Eine Abgabestation herkömmlicher Bauart weist sehr viele fixe Einbauten auf und ist zumeist sehr verwinkelt. Die Abgabestation kann daher nicht auf einfache Weise gereinigt werden, was bei der Lagerung von Lebensmitteln und verderblichen Gütern nachteilig ist. Dies trifft insbesondere für Abgabestationen zu, welche ein Regalbediengerät und fix verbaute (Hoch)-Regale aufweisen.
- Die Form der Abgabestation kann nicht leicht an örtliche Gegebenheiten angepasst werden. Insbesondere Abgabestationen mit einem Regalbediengerät weisen wegen der (geraden) Schienen, auf denen das Regalbediengerät verfährt, zwangsläufig einen länglichen rechteckförmigen Grundriss auf. Eine solche Abgabestation lässt sich unter Umständen nur schlecht in die Umgebung integrieren.
- Die Leistungsfähigkeit einer Abgabestation mit Regalbediengerät (das heißt die Warenabgaben pro Zeiteinheit) hängt direkt von der Leistungsfähigkeit des Regalbediengeräts ab. Häufig weist eine herkömmliche Abgabestation ein einziges Regalbediengerät und eine einzige Warenabgabeöffnung auf. Kommen mehrere Kunden für die Warenabholung zur gleichen Zeit, so resultieren zum Teil lange Wartezeiten. Dieses bekannte System ist zudem schlecht skalierbar, inflexibel und nicht ausfallsicher. DE 19716138 A1 offenbart ein Verfahren und eine Abgabestation gemäß den Oberbegriffen der Ansprüche 1 und 5.

Eine Aufgabe der Erfindung ist es, ein verbessertes Verfahren und eine verbesserte Abgabestation zur Verteilung von Waren anzugeben. Insbesondere sollen einige oder alle oben genannten Nachteile überwunden werden.

Die Aufgabe der Erfindung wird durch die Maßnahmen und Merkmale der Ansprüche 1 und 5 gelöst.

Die Abgabestation zur Verteilung von Waren umfasst
- einen ersten Warenlagerbereich,
- einen Kundenzugangsbereich,
- eine erste (ortsfeste) Trennwand, welche den ersten Warenlagerbereich und den Kundenzugangsbereich voneinander trennt und zumindest eine verschließbare Öffnung aufweist,
- ein Regal mit mehreren Regalfächern, die durch die zumindest eine verschließbare Öffnung in der ersten Trennwand zugänglich sind, und
- ein Warenabgabesystem, welches dazu ausgebildet ist, eine Anforderung zur Übernahme der Waren durch eine Person oder einer der Person zugeordneten Maschine entgegenzunehmen und die verschließbare Öffnung freizugeben, wenn die besagte Person oder die besagte Maschine für die Übernahme der Waren berechtigt ist,
- wobei die erste Trennwand mehrere Schwenktüren zum Verschließen der zumindest einen Öffnung aufweist und zumindest ein Teil der Schwenktüren paarweise gegenüberliegend angeschlagen ist, und
- wobei das Warenabgabesystem dazu ausgebildet ist, eine zusammenhängende Öffnung variabler Größe durch Freigabe mehrerer benachbarter und der Anforderung zugeordneter Schwenktüren individuell und abhängig von der Anforderung zur Übernahme der Waren freizugeben, die insbesondere einem zusammenhängenden Regalfach zugeordnet ist.

Demgemäß ist auch ein Verfahren zur Verteilung von Waren von Vorteil, umfassend die Schritte:
- Kommissionieren von zu einem Auftrag gehörenden Waren in zumindest ein Regalfach eines Regals,
- wobei das Regal in eine Übergabeposition in einem ersten Warenlagerbereich einer Abgabestation transportiert wird oder dort angeordnet ist, wobei die Abgabestation den durch eine erste Trennwand getrennten ersten Warenlagerbereich und einen Kundenzugangsbereich aufweist und wobei das zumindest eine Regalfach in der Übergabeposition des Regals durch eine verschließbare Öffnung in der ersten (ortsfesten) Trennwand zugänglich ist,
- wobei ein Warenabgabesystem eine Anforderung zur Übernahme der Waren durch eine Person oder einer der Person zugeordneten Maschine entgegennimmt und die verschließbare Öffnung freigibt, wenn die besagte Person oder die besagte Maschine für die Übernahme der Waren berechtigt ist, und
- wobei das Warenabgabesystem eine zusammenhängende Öffnung variabler Größe durch Freigabe mehrerer benachbarter, in der Trennwand angeordneter, zumindest teilweise paarweise gegenüberliegend angeschlagener und dieser Anforderung zugeordneter Schwenktüren zum Verschließen der Öffnung individuell und abhängig von der Anforderung zur Übernahme der Waren freigibt, die insbesondere einem zusammenhängenden Regalfach zugeordnet ist.

Diese Variante ist besonders dann von Vorteil, wenn in der Abgabestation Regale unterschiedlicher Form am Prozess zur Abgabe von Waren beteiligt sind und insbesondere dann, wenn die Regale individuell zusammengestellt werden können. Die Trennwand kann dann individuell auf die Regale eingestellt werden, wodurch Waren unterschiedlicher Größe flexibel abgegeben werden können. Im Laufe der Zeit kann eine freigegebene Öffnung an einer bestimmten (fixen) Position daher in ihrer Größe variiert werden.

Die Maschine für die Übernahme von Waren kann insbesondere als Flugdrohne ausgebildet sein, und die Abgabestation kann einen Landeplatz für diese Flugdrohne aufweisen. Der Verladeroboter ist in diesem Fall für die Beladung der Flugdrohne ausgebildet. Denkbar ist aber auch, dass die Maschine für die Übernahme von Waren als autonomes, fahrbares Fahrzeug ausgebildet ist und die Abgabestation einen Parkplatz für dieses Fahrzeug aufweist, sowie insbesondere ein Zufahrtstor oder eine Zufahrtstür zu diesem Parkplatz. Der Verladeroboter ist in diesem Fall für die Beladung des autonomen Fahrzeugs ausgebildet.

Denkbar ist weiterhin der Fall, dass eine Maschine die Waren übernimmt, jedoch eine Person zur Übernahme berechtigt ist. Beispielsweise kann eine Person gemeinsam mit einer Maschine zur Abgabestation kommen, beispielsweise mit einem autonomen oder halbautonomen Fahrzeug. Vorstellbar wäre etwa, dass der Betrieb autonomer Fahrzeuge - zum Beispiel aufgrund rechtlicher Vorgaben - verboten ist oder nur unter der Auflage erlaubt ist, dass diese von einer Person überwacht werden. In diesem Fall wären sowohl eine zur Übernahme berechtigte Person also auch die übernehmende Maschine an der Abgabestation anwesend.

Das obige System ist auf den Fall gerichtet, dass ein Warenabgabesystem der Abgabestation eine Anforderung zur Übernahme der Waren durch eine Person oder einer der Person zugeordneten Maschine entgegennimmt und die verschließbare Öffnung freigeben kann, wenn die besagte Person oder die besagte Maschine für die Übernahme der Waren berechtigt ist.

Selbstverständlich kann das Warenabgabesystem der Abgabestation auch dazu ausgebildet sein, einen Verladeroboter der Abgabestation dazu anzuweisen, die zu liefernden Waren aus dem zumindest einen Regalfach zu entnehmen und in die besagte Maschine zu verladen, wenn die besagte Person oder die besagte Maschine für die Übernahme der Waren berechtigt ist. Zudem kann das Verfahren auch das Erfassen eines Auftrags zur Lieferung von Waren durch ein Auftragsverwaltungssystem und das Auslagern der zu liefernden Waren aus einem Warenlager umfassen.

Als Verladeroboter kommen beispielsweise Mehrachsroboter und/oder Portalroboter mit Greifern in Betracht, welche die abzugebenden Waren aus dem Regalfach entnehmen und in einen Laderaum der Flugdrohne oder des autonomen Fahrzeugs befördern. Denkbar ist natürlich auch, dass die Flugdrohne oder das autonome Fahrzeug selbst über einen Mechanismus zur Übernahme der Waren verfügt.

In einer einfachen Ausführungsvariante ist der Verladeroboter durch einen Ausstoßer gebildet, welcher dazu eingerichtet ist, die in einem Regalfach befindlichen Waren durch die verschließbare Öffnung der Trennwand hindurch zu bewegen, insbesondere zu schieben. Zur Übergabe der Waren hält das autonome Fahrzeug vor der betreffenden verschließbaren Öffnung an, und die im Regalfach befindlichen und abzugebenden Waren werden mit Hilfe des Ausstoßers durch die verschließbare Öffnung der Trennwand hindurch in einen Laderaum des zur Übernahme berechtigten autonomen Fahrzeugs geschoben.

Es sei auch erwähnt, dass das Regal der Abgabestation beziehungsweise des Verfahrens in Bezug auf die Trennwand fix angeordnet sein kann. Selbstverständlich kann das Regal auch als in Bezug auf die Trennwand bewegliches, mobiles Regal ausgebildet und in eine Übergabeposition bewegbar sein, in der zumindest ein Regalfach des mobilen Regals durch die verschließbare Öffnung in der ersten Trennwand zugänglich ist.

Erfindungsgemäß umfasst die Trennwand mehrere Schwenktüren zum Verschließen der Öffnung und das Warenabgabesystem ist dazu ausgebildet, bei einer Anforderung zur Übernahme der Waren mehrere benachbarte, dieser Anforderung zugeordnete Schwenktüren freizugeben. Demgemäß ist es bei einem Verfahren zur Verteilung von Waren von Vorteil, wenn das Warenabgabesystem bei einer Anforderung zur Übernahme der Waren mehrere benachbarte, in der Trennwand angeordnete und dieser Anforderung zugeordnete Schwenktüren freigibt. Dadurch wird eine relativ große, zusammenhängende Öffnung in der Trennwand freigeben und der Zugang zu einem relativ großen, dem Auftrag zugeordneten, Regalfach ermöglicht. Auf diese Weise, können verschieden große Öffnungen für verschieden große Waren freigegeben werden. Die Schwenktüren können insbesondere einzeln freigegeben werden, paarweise nebeneinander, paarweise übereinander oder auch in einer Matrix (z.B.: 2x2 Türen) - je nach Größe des dahinter liegenden Regalfachs. Auch die Freigabe einer zum Beispiel L-förmigen Öffnung ist grundsätzlich möglich. Die Schwenkachsen der Schwenktüren können vertikal, horizontal oder gemischt vertikal und horizontal ausgerichtet sein. Günstig ist es, wenn zumindest ein Teil der Schwenktüren paarweise gegenüberliegend angeschlagen ist (d.h. deren Schwenkachsen gegenüberliegend angeordnet sind), da eine zusammenhängende Öffnung variabler Größe dann besonders einfach freigegeben werden kann. Die Schwenktüren können gleich groß oder unterschiedlich groß sein.

An dieser Stelle wird darauf hingewiesen, dass nach dem Stand der Technik Trennwände bekannt sind, die unterschiedlich große Türen aufweisen, die immer jeweils einzeln einem Auftrag beziehungsweise Regalfach zugeordnet sind. Mit Hilfe dieser bekannten Trennwände sind zwar ebenfalls unterschiedlich große Öffnungen freigebbar, nicht jedoch Öffnungen mit variabler respektive individueller Größe. Bei dem vorgeschlagenen Verfahren kann die freigegebene Öffnung, an der eine bestimmte Tür beteiligt ist, dagegen unterschiedliche Größe aufweisen. Eine bestimmte Tür ist daher im Laufe der Zeit an der Freigabe von Öffnungen unterschiedlicher Größe beteiligt. Trennwände mit Türen, die immer jeweils einzeln einem Auftrag zugeordnet sind und bei denen die einer bestimmten Tür zugeordnete Öffnung immer gleich groß ist, fallen daher nicht unter den Schutzbereich jenes vorgeschlagenen Systems, bei dem das Warenabgabesystem eine zusammenhängende Öffnung variabler Größe individuell und abhängig von der Anforderung zur Übernahme der Waren freigibt. Trennwände mit Türen, die immer jeweils einzeln einem Auftrag zugeordnet sind und bei denen die einer bestimmten Tür zugeordnete Öffnung immer gleich groß ist, können aber in den Schutzbereich anderer im Rahmen dieser Patenanmeldung dargelegten Systeme fallen.

Besonders vorteilhaft ist es auch, wenn das Warenabgabesystem bei einer Anforderung zur Übernahme der Waren eine dieser Anforderung zugeordnete Schwenkachse mehrerer Schwenkachsen einer Schwenktür aktiviert und die übrigen Schwenkachsen dieser Schwenktür deaktiviert. Beispielsweise sind die Schwenkachsen der Schwenktüren durch verschiebbare und insbesondere elektromagnetisch angetriebene Bolzen gebildet, die vom Warenabgabesystem angesteuert werden. Auf diese Weise kann ein Türenpaar sowohl mit einer benachbarten, linken Schwenktür gebildet werden, als auch mit einer benachbarten, rechten Schwenktür. Dazu wird einmal die rechte Schwenkachse der betreffenden mittleren Schwenktür aktiviert und die linke Schwenkachse deaktiviert, und einmal wird die linke Schwenkachse der betreffenden mittleren Schwenktür aktiviert und die rechte Schwenkachse deaktiviert. Alternativ oder zusätzlich kann auch eine obere und untere Schwenkachse individuell aktiviert werden.

Besonders vorteilhaft ist es weiterhin, wenn die Trennwand mehrere Schiebetüren oder Rolltüren zum Verschließen der Öffnung aufweist, welche paarweise gegenüberliegend angeordnet sind, und das Warenabgabesystem dazu ausgebildet ist, die Schiebetüren / Rolltüren bei einer Anforderung zur Übernahme der Waren so zu positionieren, dass eine der besagten Anforderung zugeordnete Öffnung freigegeben wird. Demgemäß ist es bei einem Verfahren zur Verteilung von Waren von Vorteil, wenn das Warenabgabesystem bei einer Anforderung zur Übernahme der Waren mehrere Schiebetüren oder Rolltüren der Trennwand paarweise so positioniert, dass eine der besagten Anforderung zugeordnete Öffnung freigegeben wird. Durch die vorgeschlagenen Maßnahmen kann die freigegebene Öffnung praktisch stufenlos in ihrer Größe und ihrer Position variiert werden. Dabei sollte jedoch beachtet werden, dass die freigegebene Öffnung in Position und Größe im Wesentlichen dem dahinter angeordneten Regalfach entspricht. Der Antrieb der Schiebetüren / Rolltüren kann beispielsweise elektrisch, pneumatisch oder hydraulisch erfolgen. Im Hinblick auf die vorgenannte Funktion sind Schiebetüren / Rolltüren im Wesentlichen gleichwertig, letztere benötigen aber etwas weniger Bauraum. Die Schiebetüren / Rolltüren können gleich groß oder unterschiedlich groß sein.

### Konkret kann in der Abgabestation

i) ein Paar Schiebetüren / Rolltüren vorgesehen sein, deren Bewegungsrichtung horizontal oder vertikal ausgerichtet ist und die bezogen auf die genannte Bewegungsrichtung gegenüberliegend angeordnet sind, oder
ii) ein erstes Paar Schiebetüren / Rolltüren vorgesehen sein, deren Bewegungsrichtung horizontal ausgerichtet ist und die bezogen auf diese horizontale Bewegungsrichtung gegenüberliegend angeordnet sind, und ein zweites Paar Schiebetüren / Rolltüren vorgesehen sein, deren Bewegungsrichtung vertikal ausgerichtet ist und die bezogen auf diese vertikale Bewegungsrichtung gegenüberliegend angeordnet sind, wobei das erste Paar und das zweite Paar quer zu der genannten horizontalen und der genannten vertikalen Bewegungsrichtung hintereinander liegend angeordnet sind, oder
iii) ein Paar Schiebetüren / Rolltüren vorgesehen sein, deren Bewegungsrichtung horizontal oder vertikal ausgerichtet ist und die bezogen auf diese horizontale oder vertikale Bewegungsrichtung gegenüberliegend angeordnet sind, und mehrere Schwenktüren vorgesehen sein, wobei die Schiebetüren / Rolltüren und die Schwenktüren quer zu der genannten horizontalen oder vertikalen Bewegungsrichtung hintereinander liegend angeordnet sind.

Bei den gegenüberliegend angeordneten Schiebetüren / Rolltüren verkleinert sich die zwischen den Schiebetüren / Rolltüren liegende Öffnung, wenn sich diese in der entsprechenden Bewegungsrichtung aufeinander zu bewegen und vergrößert sich, wenn sich diese in der entsprechenden Bewegungsrichtung voneinander weg bewegen.

Bei mehreren hintereinander angeordneten Verschlusselementen (Schwenktür, Schiebetür, Rolltür) kann die von einem ersten Verschlusselement freigegebene Öffnung zumindest teilweise durch ein zweites, dahinter (oder davor) liegendes Verschlusselement abgedeckt werden. In den Fällen ii) und iii) kann die die freigegebene Öffnung daher mehrdimensional in ihrer Größe und ihrer Position variiert werden.

Vorteilhaft weist zumindest eine Schiebetüre / Rolltüre individuell bewegbare Gitterstäbe oder Verschlussplatten auf, die in eine Schließposition bewegbar sind, in der sie ein Regalfach abdecken, und in eine Öffnungsposition bewegbar sind, in der sie ein Regalfach freigeben. Demgemäß ist es bei einem Verfahren zur Verteilung von Waren von Vorteil, wenn das Warenabgabesystem bei einer Anforderung zur Übernahme der Waren Gitterstäbe oder Verschlussplatten der Schiebetüren oder Rolltüren so positioniert, dass eine der besagten Anforderung zugeordnete Öffnung freigegeben wird. Insbesondere kann die Bewegungsrichtung der Gitterstäbe oder Verschlussplatten mit der Bewegungsrichtung der besagten Schiebetüre / Rolltüre übereinstimmen. Denkbar ist weiterhin, dass die Gitterstäbe oder Verschlussplatten in Gruppen bewegt werden. Der Antrieb der Gitterstäbe / Verschlussplatten kann beispielsweise elektrisch, pneumatisch oder hydraulisch erfolgen. Bei einer Rolltüre sind die Gitterstäbe oder Verschlussplatten systembedingt vorteilhaft flexibel ausgestaltet, bei einer Schiebetüre können sie auch starr sein.

Wie oben beschrieben, kann es sich von Vorteil erweisen, wenn in der Abgabestation ein mobiles Regal verwendet wird, das in eine Übergabeposition transportiert wird, sodass zumindest ein Regalfach des mobilen Regals durch die verschließbare Öffnung in der ersten (ortsfesten) Trennwand zugänglich ist.

Daraus können einige Vorteile resultieren:
- Es werden grundsätzlich keine Ladehilfsmittel benötigt, sondern die Waren können direkt in das mobile Regal gelegt werden. Auch die Verwendung eines Versandbehälters ist im Grunde nicht nötig, sondern die bestellten Waren können in dem Regalfach, das dem Auftrag zugeordnet ist, einfach abgelegt werden. Dadurch können auch sperrige und großvolumige Waren gehandhabt werden, die an sich zu groß für (genormte) Ladehilfsmittel sind. Die Verwendung eines Ladehilfsmittels, insbesondere eines Versandbehälters (z.B. einer Papiertüte, einer Plastiktüte, eines Versandkartons, etc.), ist aber nicht ausgeschlossen. Vorteilhaft wird für den Kommissioniervorgang dann ein leerer Versandbehälter in dem Regalfach abgestellt, das dem Auftrag zugeordnet ist, und die zum Auftrag gehörenden Waren werden in den Versandbehälter hinein kommissioniert.
- Die vorgeschlagene Vorgangsweise führt auch dazu, dass beim Kommissionieren niemals das Gewicht des gesamten Auftrags manipuliert (insbesondere gehoben) werden muss, sondern nur das Gewicht der einzelnen Waren. Der Kommissioniervorgang ist daher wesentlich ergonomischer und für eine Kommissionierperson weniger anstrengend. Die Manipulation gefüllter Versandbehälter ist aber nicht grundsätzlich ausgeschlossen. Denkbar ist vielmehr auch, dass der Versandbehälter mit den zu einem Auftrag gehörenden Waren befüllt und dann in das mobile Regal gehoben wird (insbesondere bei maschineller/automatischer Kommissionierung). Dasselbe gilt im Wesentlichen auch für die der Kommissionierung nachfolgende Manipulation des Auftrags. Auch hier braucht das Gewicht der betreffenden Waren nicht gehoben werden, da diese im mobilen Regal verbleiben können.
- Eine Abgabestation weist nur wenige fixe Einbauten auf und beinhaltet in erster Linie mobile Regale. Die Abgabestation kann zu Reinigungszwecken daher sehr leicht völlig ausgeräumt werden. Dadurch können hohe Hygienestandards, beispielsweise bei der Lagerung von Lebensmitteln und verderblichen Waren erreicht werden.

Vorteilhaft ist es, wenn das Regal beladen ist und das beladene, mobile Regal mit Hilfe eines Flurförderfahrzeugs in die Übergabeposition im ersten Warenlagerbereich beziehungsweise an der Trennwand transportiert wird, insbesondere mit Hilfe eines autonomen Flurförderfahrzeugs. Dadurch kann die Abgabestation völlig automatisiert betrieben werden. Durch den Einsatz mehrerer Flurförderfahrzeuge ist die Abgabestation darüber hinaus weitgehend ausfallsicher, ganz im Gegensatz zu herkömmlichen Abgabestation mit einem einzigen Regalbediengerät. Durch den Einsatz einer beliebigen Anzahl an Flurförderfahrzeugen ist die Abgabestation darüber hinaus gut skalierbar und flexibel an sich ändernde Bedürfnisse und Voraussetzungen anpassbar. Als Flurförderfahrzeuge kommen beispielsweise Fahrzeuge mit einem Hubwerk (insbesondere mit einer Hubgabel oder einem Hubstempel) in Betracht, aber auch Fahrzeuge, welche die mobilen Regale zur Beförderung nicht anheben, sondern bloß ziehen oder schieben. Das Flurförderfahrzeug ist insbesondere selbstfahrend. Das Flurförderfahrzeug kann weiterhin schienengebunden sein, ist aber insbesondere schienenungebunden. Das Flurförderfahrzeug kann zudem während einer Warenübergabe in der Übergabeposition verharren oder auch vorher wegfahren.

Besonders vorteilhaft ist es auch, wenn das beladene, mobile Regal mit Hilfe des Flurförderfahrzeugs in einen zweiten Warenlagerbereich transportiert wird, der abseits der genannten, ersten Trennwand liegt, und von dort in die Übergabeposition gebracht wird, wenn das Warenabgabesystem eine entsprechende Anforderung zur Übernahme der im mobilen Regal befindlichen Waren entgegennimmt, insbesondere wenn die anfordernde Person oder die anfordernde Maschine zur Übernahme berechtigt ist. Auf diese Weise können aktuell nicht für eine Warenabgabe benötigte mobile Regale in einem zweiten Warenlagerbereich zwischengelagert werden. Der zweite Warenlagerbereich kann abgesetzt vom ersten Warenlagerbereich und der Übergabeposition angeordnet sein. Der zweite Warenlagerbereich kann aber auch direkt an den ersten Warenlagerbereich und die Übergabeposition angrenzen.

Denkbar ist dabei insbesondere, dass beidseits des ersten Warenlagerbereichs beziehungsweise der Übergabeposition Platz für mobile Regale vorgesehen ist. In diesem Fall können zwei oder auch mehr mobile Regale simultan hin und her verschoben werden, insbesondere wenn diese aneinander gekuppelt sind. Beispielsweise kann auf diese Weise eines von drei mobilen Regalen durch einfaches Verschieben der Regalgruppe in eine Übergabeposition gebracht werden. Selbstverständlich funktioniert der Vorgang auch für eine andere Anzahl an mobilen Regalen beziehungsweise Übergabepositionen. Sind beispielsweise zwei Übergabepositionen im Bereich von fünf hintereinander angeordneten, mobilen Regalen vorgesehen, dann können dementsprechend zwei der fünf mobilen Regalen gleichzeitig in eine Übergabeposition gebracht werden und so weiter.

Die vorgeschlagene Vorgangsweise kann sinngemäß auch angewandt werden, wenn sich der von den Öffnungen belegte Bereich in der Trennwand horizontal weniger weit erstreckt als die Regalfächer des mobilen Regals breit sind. Beispielsweise kann nur eine Spalte an vertikal übereinander angeordneten Öffnungen in der Trennwand vorgesehen sein, wohingegen das mobile Regal mehrere Spalten an übereinander angeordneten Regalfächern aufweisen. Durch horizontales Verschieben des mobilen Regals oder auch einer Regalgruppe wird dann eine der Spalten übereinander angeordneter Regalfächer in Deckung mit den Öffnungen in der Trennwand gebracht.

Generell ist es günstig, wenn das mobile Regal mit Rollen ausgestattet ist, insbesondere mit angetriebenen und/oder gebremsten Rollen sowie mit und ohne lenkbare Rollen. Auf diese Weise kann das mobile Regal leicht hin und her geschoben werden. Denkbar ist dennoch, dass das mobile Regal über herkömmliche Regalsteher verfügt und keine Rollen aufweist. Das mobile Regal muss dann für den Transport angehoben werden, beispielsweise durch ein Hubwerk eines Flurförderfahrzeugs.

Besonders vorteilhaft ist es weiterhin, wenn das mobile Regal einen Akkumulator aufweist, eine mit den angetriebenen Rollen gekoppelte Fahrsteuerung, und mit der Fahrsteuerung verbundene Sensoren zur Orientierung im Raum, insbesondere ein Element oder mehrere Elemente aus der Gruppe: Kamera, Ultraschallsensor, Laserscanner, Triangulationsempfänger (GPS, Indoor-GPS) und/oder Magnetfeldsensor. Die angetriebenen Rollen verfügen beispielsweise über einen Nabenmotor, welcher mit der Fahrsteuerung verbunden ist. Ebenso ist ein Lenkmotor mit der Fahrsteuerung verbunden. Weiterhin ist die Fahrsteuerung mit den Sensoren zur Orientierung im Raum verbunden. Mit dem beschriebenen System ist eine autonome Bewegung des mobilen Regals möglich. Das Verfahren zur Steuerung autonomer Fahrzeuge ist grundsätzlich bekannt und wird hier nicht im Detail beschrieben. Insbesondere kann für das mobile Regal das gleiche oder ein ähnliches Verfahren angewandt werden wie es für Flurförderfahrzeuge bekannt ist. Da sich das mobile Regal autonom in der Abgabestation bewegen kann, können Flurförderfahrzeuge prinzipiell entfallen. Denkbar ist aber auch, dass diese Spezial- oder Assistenzaufgaben übernehmen.

Insbesondere kann vorgesehen sein, dass ein selbstfahrendes und einen Fahrmotor aufweisendes, mobiles Regal mit Hilfe des Fahrmotors
- in die Übergabeposition im ersten Warenlagerbereich fährt und/oder
- in den zweiten Warenlagerbereich fährt.

In einer weiteren vorteilhaften Ausführungsvariante der Abgabestation umfasst diese eine im ersten Warenlagerbereich angeordnete Hubeinrichtung für das mobile Regal. Demgemäß wird das mobile Regal durch eine im ersten Warenlagebereich angeordnete Hubeinrichtung vertikal in die Übergabeposition bewegt. Dies ist insbesondere dann von Vorteil, wenn sich der von den Öffnungen belegte Bereich in der Trennwand vertikal weniger hoch erstreckt als die Regalfächer des mobilen Regal hoch sind. Beispielsweise kann die Trennwand nur eine Reihe (Zeile) an Öffnungen aufweisen, wohingegen das mobile Regal zwei oder mehr Lagerebenen aufweist. Mit Hilfe der Hubeinrichtung kann eine beliebige Lagerebene in die Höhe der Öffnungen in der Trennwand bewegt und der Warentransfer ermöglicht werden. Die Hubeinrichtung kann beispielsweise einen Hydraulikzylinder, Pneumatikzylinder oder elektrischer Spindelmotor aufweisen oder durch diesen gebildet sein.

Günstig ist es weiterhin, wenn das mobile Regal auf einer Rückseite eine Regalfach-Abschlusswand aufweist und das zumindest eine Regalfach benachbart zur Regalfach-Abschlusswand angeordnet ist und nur von einer Seite des mobilen Regals zugänglich ist. Auf diese Weise wird einerseits verhindert, dass die im Regalfach befindlichen Waren hinten aus dem mobilen Regal hinausfallen, andererseits wird dadurch auch verhindert, dass eine die Waren abholende Person nicht unberechtigt über das Regalfach hinaus Zugang zu dem Inneren der Abgabestation erlangt.

Günstig ist es aber auch, wenn das mobile Regal eine mittige Regalfach-Trennwand aufweist, und beidseits der Regalfach-Trennwand je zumindest ein Regalfach angeordnet ist, das jeweils nur von einer Seite des mobilen Regals zugänglich ist. Auf diese Weise kann das mobile Regal mit seiner Vorderseite oder seiner Rückseite hin zu den verschließbaren Öffnungen in der Trennwand positioniert werden, je nachdem in welchem Regalfach die abzugebenden Waren lagern. Ein Vorteil liegt auch darin, dass die Kapazität gegenüber einem von einer Seite zugänglichen mobilen Regal im Hinblick auf die Anzahl der aufgenommenen Aufträge praktisch verdoppelt ist.

Vorteilhaft ist es in diesem Zusammenhang auch, wenn die Abgabestation
- eine zweite (ortsfeste) Trennwand umfasst, welche den ersten Warenlagerbereich und den Kundenzugangsbereich voneinander trennt und zumindest eine verschließbare Öffnung aufweist, und
- sich das mobile Regal in einer Übergabeposition befindet, in der ein erstes Regalfach des mobilen Regals durch die verschließbare Öffnung in der ersten Trennwand zugänglich ist und ein zweites Regalfach des mobilen Regals, welches durch die mittige Trennwand vom ersten Regalfach getrennt ist, durch die verschließbare Öffnung in der zweiten Trennwand zugänglich ist.

Bei dieser Ausführungsvariante befindet sich also an der Vorderseite des mobilen Regals eine erste Trennwand mit ersten verschließbaren Öffnungen und an der Rückseite eine zweite Trennwand mit zweiten verschließbaren Öffnungen. Auf die an beiden Seiten der mittigen Regalfach-Trennwand gelegenen Regalfächer kann daher prinzipiell gleichzeitig zugegriffen werden. Dadurch wird die Kapazität der Abgabestation (also die möglichen Warentransfers pro Zeiteinheit) gegenüber einer einfachen Trennwand mit verschließbaren Öffnungen praktisch verdoppelt. Die vorgeschlagene Bauweise der Abgabestation eignet sich insbesondere für kleinere Bauwerke. Insbesondere kann die Außenwand der Abgabestation im Wesentlichen einen U-förmigen Grundriss aufweisen, in den ein mobiles Regal oder mehrere mobile Regale passen, und ansonsten im Wesentlichen nur ein Zugangstor und ein Dach aufweisen.

Günstig ist es schließlich auch, wenn der erste Warenlagerbereich und/oder der zweite Warenlagebereich klimatisiert ist/sind. Auf diese Weise eignet sich die vorgestellte Abgabestation insbesondere für die Lagerung von Lebensmitteln und verderblichen Waren. Selbstverständlich können auch unterschiedlich temperierte Klimazonen vorgesehen sein, um zum Beispiel Lebensmittel unterschiedlicher Art unter günstigen Bedingungen lagern zu können.

Günstig ist es, wenn das mobile Regal eine Hängestange zur Aufnahme von Hängewaren und/oder Hängetaschen aufweist. Der Einsatz einer Hängestange ist dabei nicht an die Verteilung an Kleidungsstücke gebunden, sondern in Hängetaschen können auch Waren allgemeiner Art enthalten sein. Insbesondere können die Hängetaschen als Einweg-Hängetaschen ausgebildet sein, die vom Kunden bei der Abholung der Waren mitgenommen werden können. Die Hängetasche kann aber auch für den Kunden unlösbar an der Hängestange befestigt sein, sodass der Kunde nur die Waren, nicht aber die Hängetasche mitnehmen kann.

Vorteilhaft ist es, wenn das mobile Regal
- individuell konfigurierbare Regal-Trennwände und/oder Rückwände und/oder Fachböden und/oder Hängestangen aufweist oder
- mehrere untereinander verbindbare Module mit Regalfächern unterschiedlicher Größe aufweist.

Beispielsweise können die besagten Module durch eine werkzeuglos herstellbare und lösbare Steckverbindung zusammengefügt sein. Die Module können eine unterschiedliche Anzahl an Regalfächern und/oder Hängestangen aufweisen. Beispielsweise können Module mit 1x3 Regalfächern, mit 2x2 Fächern oder mit 2x1 Fächern vorgesehen sein. Alternativ oder zusätzlich ist vorstellbar, dass in einem Grundkörper des Regals Nuten vorgesehen sind, in die Fachböden oder Regal-Trennwände individuell eingeschoben werden können. Anstelle der Nuten können natürlich auch andere Haltemittel für die Fachböden und Regal-Trennwände vorgesehen sein, zum Beispiel Haltestifte oder Halteleisten. Die Fächer können gleich groß oder unterschiedlich groß sein.

Vorteilhaft ist es, wenn das mobile Regal einen elektronischen Speicher oder eine elektronische Schaltung aufweist, in welchem/welcher Informationen über die Form beziehungsweise den geometrischen Aufbau des mobilen Regals gespeichert sind. Diese Variante ist besonders dann von Vorteil, wenn in der Abgabestation Regale unterschiedlicher Form am Prozess zur Abgabe von Waren beteiligt sind und insbesondere dann, wenn die Regale individuell zusammengestellt werden können. Diese gespeicherten Informationen können beispielsweise an das Warenabgabesystem übermittelt werden, welche in Folge an die Regalfächer angepasste Öffnungen freigeben kann.

Günstig ist es, wenn das mobile Regal Schaltkontakte aufweist, mit denen die Position eines im mobilen Regal angeordneten Fachbodens oder einer im mobilen Regal angeordneten Regal-Trennwand oder einer im mobilen Regal angeordneten Hängestange ermittelbar ist. Diese Information kann dann drahtgebunden oder über Funk an den elektronischen Speicher / die elektronische Schaltung des Regals weitergeleitet werden, die sie dann beispielsweise dem Warenabgabesystem bereitstellt.

Vorteilhaft ist es, wenn die Abgabestation eine optische oder elektronische Erfassungseinrichtung umfasst, die dazu ausgebildet ist, eine Form beziehungsweise einen geometrischen Aufbau des mobilen Regals zu ermitteln. Demgemäß ist es bei dem vorgestellten Verfahren von Vorteil, wenn eine optische oder elektronische Erfassungseinrichtung eine Form beziehungsweise einen geometrischen Aufbau des mobilen Regals ermittelt und an das Warenabgabesystem übermittelt. Diese Variante ist besonders dann von Vorteil, wenn in der Abgabestation Regale unterschiedlicher Form am Prozess zur Abgabe von Waren beteiligt sind und insbesondere dann, wenn die Regale individuell zusammengestellt werden können. Als Erfassungseinrichtungen können zum Beispiel eine Kamera, ein Scanner und Tiefenmesssensoren vorgesehen sein sowie elektronische Empfänger, die Informationen über die Form beziehungsweise den geometrischen Aufbau des Regals über Funk empfangen (beispielsweise von der am Regal angeordneten elektronischen Schaltung, die diese Informationen speichert und weitermeldet).

Zum besseren Verständnis der Erfindung wird diese anhand der nachfolgenden Figuren näher erläutert. Es zeigen:
- Fig. 1: ein erstes Beispiel einer Abgabestation mit einem einseitig zugänglichen mobilen Regal, das etwas beabstandet vor eine Trennwand mit verschließbaren Öffnungen positioniert ist;
- Fig. 2: die in Fig. 1 gezeigte Abgabestation mit dem mobilen Regal in Übergabeposition;
- Fig. 3: ein schematisch dargestelltes Beispiel für ein Warenverteilsystem mit einer Abgabestation in Draufsicht;
- Fig. 4: ein Beispiel für eine Abgabestation in Draufsicht;
- Fig. 5: ein Beispiel für eine Abgabestation mit einem Sortierroboter in Draufsicht;
- Fig. 5a: eine ausschnittsweise Vorderansicht der in Fig. 5 dargestellten Abgabestation;
- Fig. 6: ein Beispiel eines zweiseitig zugänglichen mobilen Regals, das in Übergabeposition vor einer Trennwand mit verschließbaren Öffnungen positioniert ist;
- Fig. 7: ein Beispiel eines zweiseitig zugänglichen mobilen Regals, das zwischen zwei Trennwänden mit verschließbaren Öffnungen positioniert ist;
- Fig. 8: ein Beispiel einer Abgabestation mit Führungsschienen für das mobile Regal;
- Fig. 9: ein Beispiel für ein Flurförderfahrzeug, das ein mobiles Regal vor einer Trennwand mit verschließbaren Öffnungen positioniert;
- Fig. 10: das Regal aus Fig. 9 in Übergabeposition und mit sichtbarer Kupplung;
- Fig. 11: ein Beispiel für ein Flurförderfahrzeug mit einer Hubgabel zum Anheben des mobilen Regals, welches in Querrichtung des mobilen Regals fährt;
- Fig. 12: ein Beispiel für ein Flurförderfahrzeug mit einer Hubgabel zum Anheben des mobilen Regals, welches in Längsrichtung des mobilen Regals fährt;
- Fig. 13: ein Beispiel für eine Abgabestation mit einer Hubeinrichtung für das mobile Regal;
- Fig. 14: die Abgabestation aus Fig. 13 mit angehobenem Regal;
- Fig. 15: ein Beispiel für eine Abgabestation mit einer Schnittstelle für ein autonomes Fahrzeug;
- Fig. 16: ein Beispiel für eine Abgabestation mit einer Schnittstelle für ein autonomes Fahrzeug und eine Flugdrohne;
- Fig. 17: ein Beispiel eines autonom fahrenden mobilen Regals;
- Fig. 18: ein Regal, das mehrere untereinander verbindbare Regalmodule unterschiedlicher Größe aufweist;
- Fig. 19: ein Regal mit individuell konfigurierbaren Regal-Trennwänden und Fachböden;
- Fig. 20: eine Detailansicht des Regals aus Fig. 19 mit einem Schalter zur Erfassung einer Regal-Trennwand;
- Fig. 21: ein Beispiel einer Abgabestation, bei dem bei einer Anforderung zur Übernahme von Waren mehrere Schwenktüren gleichzeitig freigegeben werden, im geschlossenen Zustand der Schwenktüren;
- Fig. 22: wie Fig. 21, nur mit geöffneten Schwenktüren und mit dem mobilen Regal in Übergabeposition;
- Fig. 23: ein Beispiel einer Abgabestation, bei dem die Schwenktüren bedarfsweise nach links oder nach rechts geöffnet werden können;
- Fig. 24: ein Beispiel einer Abgabestation mit paarweise gegenüberliegend angeordneten Schiebetüren im geschlossenen Zustand der Schiebetüren;
- Fig. 25: wie Fig. 24, nur mit geöffneten Schiebetüren;
- Fig. 26: wie Fig. 24, nur mit einer Schiebetür, welche bewegbare Gitterstäbe umfasst;
- Fig. 27: ein Beispiel einer Abgabestation, bei dem die Trennwand ein Paar horizontal bewegbarer und ein Paar vertikal bewegbarer Schiebetüren aufweist;
- Fig. 28: ähnlich wie Fig. 24, nur mit Rolltüren anstelle von Schiebetüren;
- Fig. 29: ein Beispiel einer Abgabestation, bei dem die Trennwand hintereinander liegende Schiebtüren und Schwenktüren aufweist;
- Fig. 30: einen beispielhaften Lastkraftwagen mit Förderrollen in einem Laderaum und auf den Förderrollen stehenden Regalen, welcher an einer Laderampe einer Abgabestation abgestellt ist, in Seitenansicht;
- Fig. 31: die Anordnung aus Fig. 30 in Draufsicht;
- Fig. 32: einen beispielhaften Lastkraftwagen mit Hänge-/Tragschienen in einem Laderaum und auf den Hänge-/Tragschienen hängenden Regalen, welcher an einer Laderampe einer Abgabestation abgestellt ist, in Seitenansicht;
- Fig. 33: die Anordnung aus Fig. 32 in Draufsicht;
- Fig. 34: einen beispielhaften Lastkraftwagen mit einer Seilwinde zum Laden eines Regals in den Laderaum;
- Fig. 35: einen beispielhaften Lastkraftwagen mit einer Seilwinde zum Laden eines Regals aus dem Laderaum und
- Fig. 36: einen beispielhaften Lastkraftwagen mit umlaufenden Mitnehmern zum Laden eines Regals in einen oder aus einem Laderaum.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

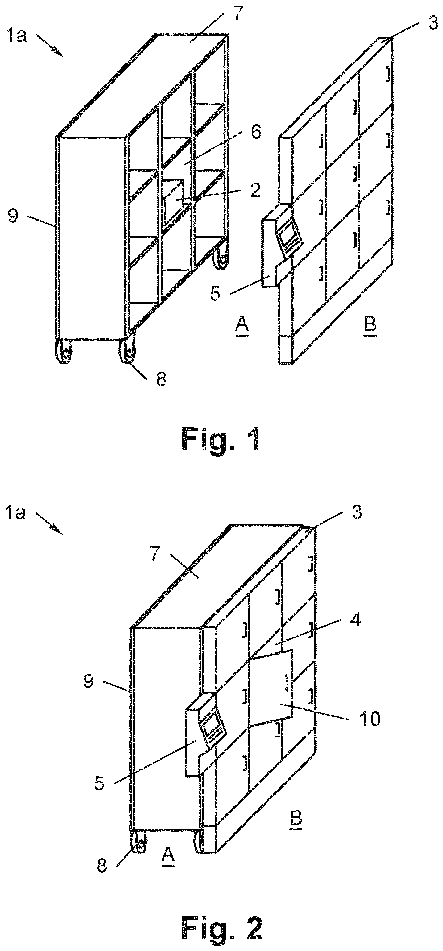

Die Figuren 1 und 2 zeigen ein erstes Beispiel einer Abgabestation 1a zur Verteilung von Waren 2. Die Abgabestation 1a umfasst einen ersten Warenlagerbereich A, einen Kundenzugangsbereich B sowie eine erste (ortsfeste) Trennwand 3, welche den ersten Warenlagerbereich A und den Kundenzugangsbereich B voneinander trennt und mehrere verschließbare Öffnungen 4 aufweist. Weiterhin umfasst die Abgabestation 1a ein Warenabgabesystem 5, welches dazu ausgebildet ist, eine Anforderung zur Übernahme einer Ware 2 durch eine Person oder einer der Person zugeordneten Maschine entgegenzunehmen und die verschließbare Öffnung 4 freizugeben, wenn die besagte Person oder die besagte Maschine für die Übernahme der Ware 2 berechtigt ist.

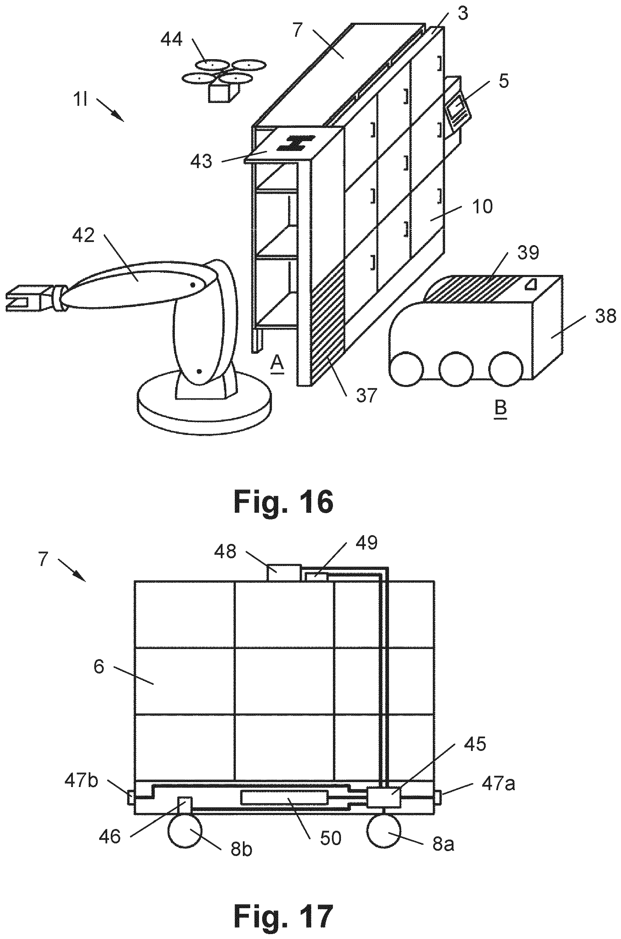

Die Ware 2 befindet sich in einem Regalfach 6 eines mobilen Regals 7, das im gezeigten Beispiel mit Rollen 8 ausgestattet ist, sowie auf einer Rückseite eine Regalfach-Abschlusswand 9 aufweist. Das Regalfach 6 ist benachbart zur Regalfach-Abschlusswand 9 angeordnet und somit nur von einer Seite des mobilen Regals 7 zugänglich. Die Rollen 8 können teilweise oder alle lenkbar und/oder gebremst sein. Darüber hin aus kann überhaupt vorgesehen sein, dass das mobile Regal 7 autonom operieren kann (siehe Fig. 17).

Die Fig. 1 zeigt die Anordnung 1 in einem Zustand, in dem das mobile Regal 7 etwas beabstandet von der Trennwand 3 abgestellt ist. In der Fig. 2 befindet sich das mobile Regal 6 dagegen in einer Übergabeposition, in der die Regalfächer 6 des mobilen Regals 7 durch die verschließbaren Öffnungen 4 in der ersten Trennwand 3 zugänglich sind. Unter der Annahme das eine Berechtigung zur Übernahme der Waren 2 vorliegt, wurde die Tür 10 durch das Warenabgabesystem 5 freigegeben und ist in der Fig. 2 im geöffneten Zustand dargestellt. Das Warenabgabesystem 5 kann, wie in den Figuren 1 und 2 dargestellt, einen Bildschirm und eine Tastatur aufweisen. Auch der Einsatz eines Touchscreens oder anderer Eingabemittel ist natürlich möglich.

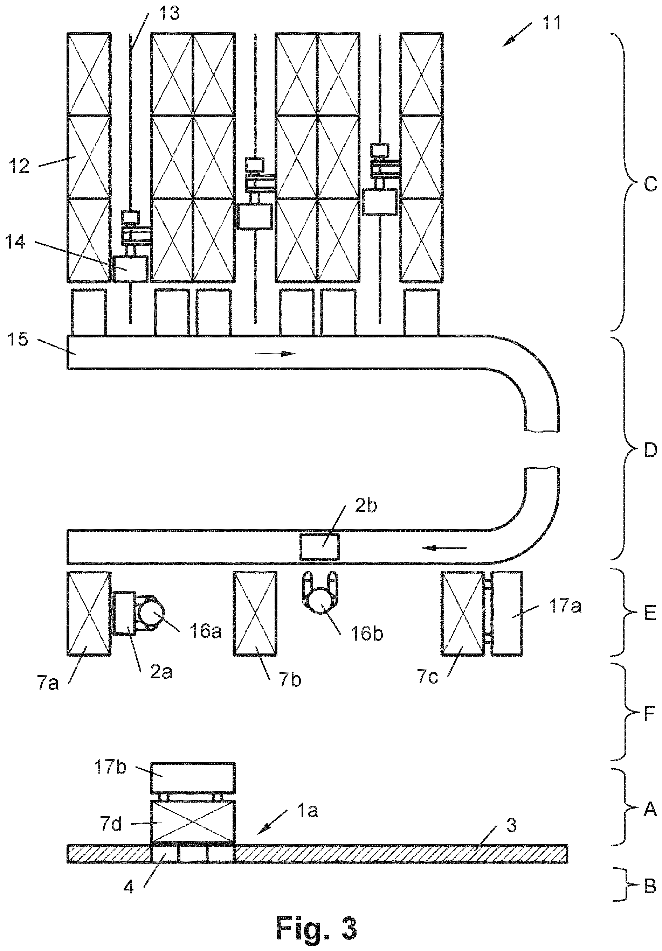

Fig. 3 zeigt ein Beispiel, wie die Abgabestation 1a in ein Warenverteilsystem 11 respektive in einen Warenverteilfluss eingebunden sein kann. Konkret zeigt Fig. 3 dazu eine schematische Draufsicht auf das Warenverteilsystem 11, das einen Hochregal-Lagerbereich C, einen ersten Förderbereich D, einen Kommissionierbereich E, einen zweiten Förderbereich F, sowie den ersten Warenlagerbereich A und den Kundenzugangsbereich B umfasst.

Im Hochregal-Lagerbereich C befinden sich mehrere Hochregale 12 mit dazwischen verlegten Schienen 13 und darauf verfahrbaren Regalbediengeräten 14. Im ersten Förderbereich D befindet sich eine Förderbahn 15, die beispielsweise als Rollenförderer ausgebildet sein kann. Im Kommissionierbereich E befinden sich mehrere mobile Regale 7a..7c, sowie zwei Arbeiter 16a, 16b und ein erstes Flurförderfahrzeug 17a. Im Warenlagerbereich A befinden sich schließlich ein zweites Flurförderfahrzeug 17b mit einem mobilen Regal 7d. Der Kundenzugangsbereich B und der erste Warenlagerbereich A sind wiederum durch eine erste ortsfeste Trennwand 3, welche mehrere verschließbare Öffnung 4 aufweist, voneinander getrennt. Die Flurförderfahrzeuge 17a, 17b sind in diesem Beispiel selbstfahrend. Die Flurförderfahrzeuge 17a, 17b können weiterhin schienengebunden sein, sind aber - wie im vorliegenden Beispiel - insbesondere schienenungebunden.

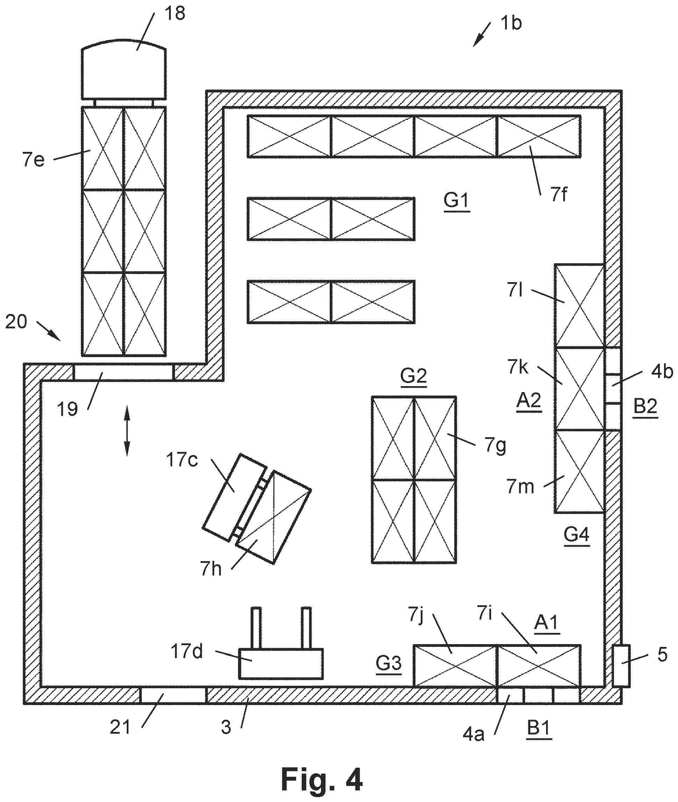

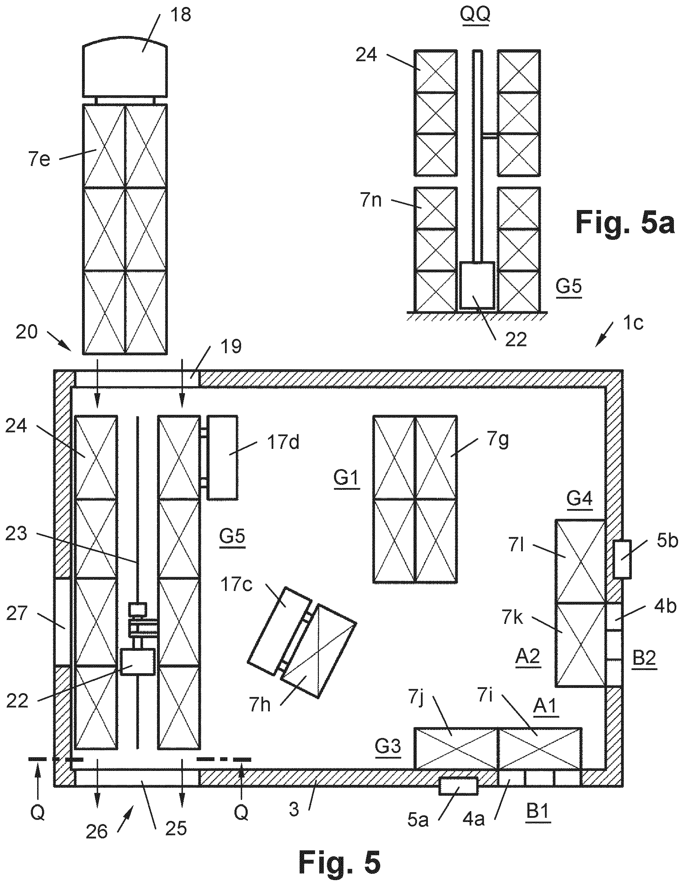

Ein beispielhaftes Verfahren zur Verteilung von Waren 2a, 2b umfasst nun die folgenden Schritte:
In einem ersten Schritt wird ein Auftrag zur Lieferung von Waren 2a, 2b durch ein oder in einem Auftragsverwaltungssystem erfasst. Das Auftragsverwaltungssystem, das Teil der Abgabestation 1a ist oder mit dieser gekoppelt ist (siehe hierzu Fig. 4 und 5), umfasst beispielsweise einen übergeordneten Rechner. Dieser Rechner hat Kenntnis darüber, welche Waren 2a..2b an welchen Kunden zu liefern sind. Dieser Rechner kann auch Informationen haben, welche Ware 2a, 2b in welchem Fach des Hochregals 12 lagert. Für die genannten Funktionen können natürlich auch zwei getrennte Rechner vorgesehen sein. Anhand des Auftrags zur Lieferung von Waren 2a, 2b werden die Regalbediengeräte 14 in an sich bekannter Weise angesteuert, um die zu liefernden Waren 2a, 2b aus dem Warenlager (hier gebildet durch die Hochregale 12) auszulagern. In einem nächsten Schritt werden die Waren 2a, 2b mit Hilfe der Förderbahn 15 in den Kommissionierbereich D transportiert. Vorteilhaft erfolgt dies sortiert nach Aufträgen. In einem nächsten Schritt werden die zu einem Auftrag gehörenden Waren 2a, 2b in ein Regalfach 6 eines mobilen Regals 7a, 7b abgelegt. In dem dargestellten Beispiel legt der Arbeiter 16a konkret die Ware 2a in das mobile Regal 7a ab. Mit Hilfe von Flurförderfahrzeugen 17a,17b werden die befüllten mobilen Regale 7a..7d bedarfsweise zur Abgabestation 1a transportiert. Diese weist den schon in den Figuren 1 und 2 beschriebenen, ersten Warenlagerbereich A und Kundenzugangsbereich B auf, die durch eine erste Trennwand 3 voneinander getrennt sind.

Die erste Trennwand 3 ist beispielsweise so wie in den Figuren 1 und 2 ausgebildet und weist mehrere verschließbare Öffnung 4 auf, sowie ein Warenabgabesystem 5. In der Fig. 3 wurde das mobile Regal 7d vom Flurförderfahrzeug 17b im ersten Warenlagerbereich A in eine Übergabeposition gebracht, in welcher die Regalfächer 6 durch die verschließbaren Öffnungen 4 in der ersten Trennwand 3 zugänglich sind. Sobald das Warenabgabesystem 5 eine Anforderung zur Übernahme der Ware 2a durch eine Person oder einer der Person zugeordneten Maschine entgegennimmt und die besagte Person oder die besagte Maschine für die Übernahme der Ware 2a berechtigt ist, gibt sie die verschließbare Öffnung 4 frei. Das Flurförderfahrzeug 17b kann während einer Warenübergabe in der Übergabeposition verharren, oder es kann auch vorher wegfahren.

Der Transportbereich F kann auch anders ausgebildet sein und insbesondere das öffentliche Straßennetz umfassen. Im Grund wird das Warenverteilsystem 10 dadurch in ein Warenlager und die Abgabestation 1a aufgeteilt.

Fig. 4 zeigt dazu ein Beispiel, bei dem die beladenen mobilen Regale 7a..7d nach dem Kommissionieren der Waren 2a, 2b in einem Warenlager in einen Lastkraftwagen 18 verladen werden, mit Hilfe des Lastkraftwagens 18 zur Abgabestation 1b transportiert werden und bei der Abgabestation 1b wieder aus dem Lastkraftwagen 18 ausgeladen werden. Das Warenlager und die Abgabestation 1b sind also örtlich getrennt, wobei ein Transportsystem, insbesondere hier ein Lastkraftwagen 18, das Warenlager und die Abgabestation 1d verbindet.

Die Abgabestation 1b umfasst ein Gebäude mit der (Trenn)Wand 3, welche einerseits schon in der beschriebenen Weise die ersten Warenlagerbereiche A1, A2 von den Kundenzugangsbereichen B1, B2 trennt, und in dem vorliegenden Beispiel zusätzlich ein Tor 19 an einer ersten Laderampe 20, sowie eine Zugangstür 21 aufweist. In diesem Beispiel sind zudem zwei Gruppen von verschließbaren Öffnungen 4a und 4b vorgesehen, die an verschiedenen Außenwänden 3 des Gebäudes angeordnet sind. Das Warenabgabesystem 5 ist in diesem Beispiel nicht direkt bei den verschließbaren Öffnungen 4a und 4b angeordnet, sondern das den verschließbaren Öffnungen 4a und 4b zugordnete Warenabgabesystem 5 befindet sich an gesonderter Stelle. Neben den ersten Warenlagerbereichen A1, A2 umfasst die Abgabestation 1b schließlich mehrere zweite Warenlagerbereiche G1..G4.

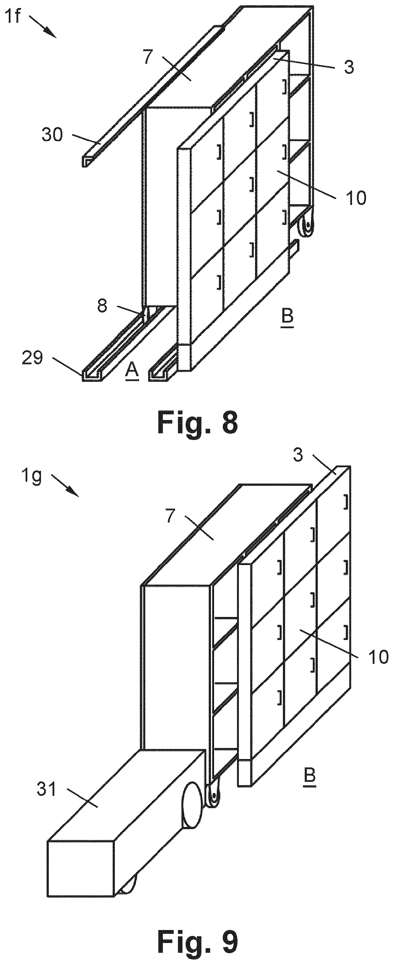

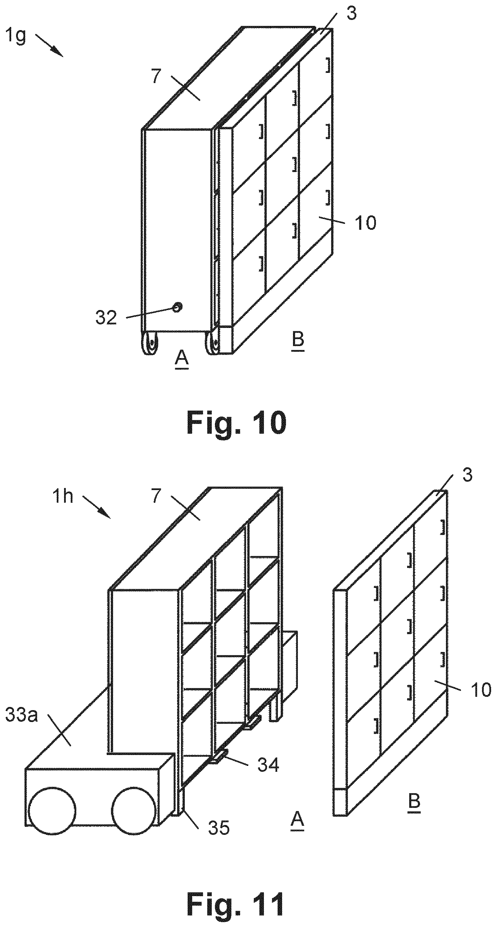

Ein beispielhafter Ablauf zur Verteilung von Waren 2a, 2b ist nun wie folgt:
An der erste Laderampe 20 werden die befüllten mobilen Regale 7e aus dem Lastkraftwagen 18 entladen. Dies kann beispielsweise Regal für Regal erfolgen, oder es werden mehrere mobile Regale 7e gemeinsam in einem Schritt entladen. Dazu können die mobilen Regale 7e Kupplungen aufweisen (siehe auch die Figuren 9 und 10), mit deren Hilfe sie temporär miteinander verbunden werden können. In Folge können die mobilen Regale 7e beispielsweise mit einem Flurförderfahrzeug 17c, 17d oder auch mit Hilfe einer gegenüber dem Tor 19 angeordneten Seilwinde (nicht dargestellt) aus dem Lastkraftwagen 18 gezogen werden.

In einem weiteren Schritt werden die befüllten mobilen Regale 7e zu den zweiten Warenlagerbereichen G1 und G2 befördert und dort abgestellt. Vorzugsweise erfolgt dies mit Hilfe der Flurförderfahrzeuge 17c, 17d, der Schritt kann aber auch manuell erfolgen.

Die zweiten Warenlagerbereiche G1 und G2 sind nicht zwingend an der in Fig. 4 dargestellten Position, sondern das Gebäude kann auch in andere zweite Warenlagerbereiche eingeteilt werden. Insbesondere kann Form, Größe und Position der zweiten Warenlagerbereiche G1 und G2 an verschiedene Gebäude-Grundrisse beziehungsweise auch an unterschiedliche Situationen angepasst werden. Im Speziellen können die zweiten Warenlagerbereiche G1 und G2 im Laufe der Zeit auch geändert werden. Ein besonderer Vorteil des vorgestellten Systems liegt auch darin, dass das Gebäude in kurzer Zeit völlig leergeräumt werden kann, beispielsweise um dieses zu reinigen. Dies ist von besonderem Vorteil, wenn in der Abgabestation 1b verderbliche Lebensmittel manipuliert werden. Das Gebäude beinhaltet nur wenige fixe Einbauten und ist ansonsten im Grunde nur mit mobilen Regalen 7f..7m befüllt.

Nach dem Entladen des Lastkraftwagens 18 wird dieser mit leeren oder Retourware enthaltenden mobilen Regalen 7f..7m beladen. Dies kann analog zu der schon zum Entladevorgang beschriebenen Weise erfolgen. Das heißt, die mobilen Regale 7f..7m können einzeln in den Lastkraftwagen 18 geladen werden, oder es werden mehrere oder auch alle mobile Regale 7f..7m in einem Schritt in den Lastkraftwagen 18 geladen. Dazu können die mobilen Regale 7f..7m wieder aneinander gekuppelt werden. Das Beladen kann wiederum manuell, mit Hilfe eines Flurförderfahrzeuge 17c, 17d oder auch mit einer im Lastkraftwagen 18 eingebauten Seilwinde (nicht dargestellt) erfolgen. Zur Vorbereitung des Beladevorgangs können die Flurförderfahrzeuge 17c, 17d leere oder Retourware enthaltende mobile Regale 7f..7m gruppiert in einem speziellen zweiten Lagerbereich G1, G2 abstellen, insbesondere in unmittelbarer Nähe zur Verladerampe 20, sodass das Beladen sehr rasch erfolgen kann. Der beladene Lastkraftwagen 18 kann nun den Weg zurück zum Warenlager antreten, wo die leeren oder Retourware enthaltenden mobilen Regale aus dem Lastkraftwagen 18 entladen werden und für den nächsten Kommissioniervorgang zur Verfügung stehen.

Wird in der Abgabestation 1b eine Abholung von Waren 2a, 2b erwartet, beispielsweise weil diese für eine bestimmte Uhrzeit angekündigt wurde, so wird das betreffende mobile Regal 7f..7m in eine Übergabeposition in einen der ersten Warenlagerbereiche A1, A2 gebracht, oder es kann auch in einen zweiten Lagerbereich G3, G4 befördert werden. Der zweite Lagerbereich G3 befindet sich unmittelbar neben dem ersten Warenlagerbereich A1 respektive unmittelbar neben einer Übergabeposition für die Öffnungen 4a. Der zweite Lagerbereich G4 befindet sich unmittelbar neben dem ersten Warenlagerbereich A2 respektive unmittelbar neben einer Übergabeposition für die Öffnungen 4b.

Wird nun am Warenabgabesystem 5 eine Anforderung zur Übernahme einer Ware 2a, 2b entgegengenommen, so wird geprüft, ob eine Berechtigung vorliegt und sich das betreffende mobile Regal 7f..7m bereits in einer Übergabeposition befindet. In dem in der Fig. 4 dargestellten Beispiel trifft dies für die mobilen Regale 7i und 7k zu. In diesem Fall kann direkt die der Anforderung zugeordnete Öffnung 4a, 4b freigegeben werden, um die Warenübernahme zu ermöglichen.

Befindet sich das die angeforderten Waren 2a, 2b enthaltende mobile Regal 7f..7m in einem zweiten Lagerbereich G1..G4, muss dieses für die Abgabe der Waren 2a, 2b erst in eine Übergabeposition gebracht werden.

Befindet sich das die angeforderten Waren 2a, 2b enthaltende mobile Regal 7f..7m in einem zweiten Lagerbereich G3, G4 in unmittelbare Nähe einer Übergabeposition, was in dem gezeigten Beispiel für die mobilen Regale 7j, 7l und 7m zutrifft, so kann dieser Vorgang sehr rasch erfolgen. Soll etwa das mobile Regal 7j an den Öffnungen 4a angedient werden, so braucht nur das mobile Regal 7i etwas von der Übergabeposition weggerückt und das mobile Regal 7j in die Übergabeposition geschoben werden. Der Vorgang kann besonders schnell erfolgen, wenn daran beide Flurförderfahrzeuge 17c, 17d beteiligt sind.

Denkbar wäre auch, dass beidseits der Übergabeposition Platz für mobile Regale 7f..7m ist, so wie dies in der Fig. 4 für die Übergabeposition an den Öffnungen 4b der Fall ist. Trifft dies zu, so können zwei oder auch mehr mobile Regale 7k..7m simultan hin und her verschoben werden, insbesondere wenn diese aneinander gekuppelt sind (vergleiche auch die Figuren 9 und 10).

In der Fig. 4 kann auf diese Weise eines der drei mobile Regale 7k..7m durch einfaches Verschieben in eine Übergabeposition gebracht werden. Selbstverständlich funktioniert der Vorgang auch für eine andere Anzahl an mobilen Regalen 7k..7m beziehungsweise Übergabepositionen. Sind beispielsweise zwei Übergabepositionen im Bereich von fünf hintereinander angeordneten, mobilen Regalen 7f..7m, dann können dementsprechend zwei der fünf mobilen Regalen 7f..7m gleichzeitig in eine Übergabeposition gebracht werden und so weiter.

Nicht benötigte oder leere beziehungsweise im Wesentlichen leere mobile Regale 7f..7g werden vorzugsweise in einen der zweiten Lagerbereiche G1, G2 befördert und dort abgestellt.

Die Fig. 5 zeigt nun ein weiteres Beispiel einer Abgabestation 1c, welche der in Fig. 4 dargestellten Abgabestation 1b ähnlich ist. Im Unterschied dazu weist das Gebäude der Abgabestation 1c nun aber einen anderen Grundriss auf als das Gebäude der Abgabestation 1b, und auch die Öffnungen 4b befinden sich an etwas anderer Stelle. Ein markanter Unterschied besteht auch darin, dass die Abgabestation 1c ein schienengebundenes Mehrebenen-Regalbediengerät 22 aufweist, das als Sortierroboter fungiert und auf der Schiene 23 bewegbar ist. Denkbar wäre auch der Einsatz eines Einebenen-Regalbediengeräts oder mehrerer Einebenen-Regalbediengeräte, insbesondere in Verbindung mit einem Lift oder Paternoster. Der Lift oder der Paternoster kann für den Warentransport, den Transport eines leeren Einebenen-Regalbediengeräts und/oder eines beladenen Einebenen-Regalbediengeräts vorgesehen sein.

Im Wirkungsbereich des Mehrebenen-Regalbediengeräts 22 befinden sich mehrere Regale 24, 7n. Für einen Zugriff auf die Regale kann das Mehrebenen-Regalbediengerät 22 entlang der Schiene 23 verfahren werden, beziehungsweise kann eine Ladeplattform entlang eines Mastes auch in der Höhe verfahren werden. Die Arbeitsweise eines Mehrebenen-Regalbediengeräts 22 ist grundsätzlich bekannt und wird daher nicht im Detail erläutert.

Aus der Vorderansicht QQ geht hervor, dass die Regale im Wirkungsbereich des Mehrebenen-Regalbediengeräts 22 in dem konkret dargestellten Beispiel einerseits durch die fixen Regale 24 gebildet sind, andererseits auch durch die mobilen Regale 7n. Wie aus der Vorderansicht QQ ersichtlich ist, liegt eine Unterkante des fixen Regals 24 höher als eine Oberkante der mobilen Regale 7n. Auf diese Weise können die mobilen Regale 7n unter den fixen Regalen 24 hindurch geschoben werden. Dies ist zwar ein vorteilhaftes, jedoch nicht zwingendes Merkmal der Abgabestation 1c.

Ein beispielhafter Ablauf zur Verteilung von Waren 2a, 2b durch die Abgabestation 1c ist nun wie folgt:
Wie schon bei der Abgabestation 1b beschrieben, werden befüllte mobile Regale 7e mit dem Lastkraftwagen 18 antransportiert und an der ersten Laderampe 20 entladen. Das Entladen kann wieder Regal für Regal erfolgen, oder es werden mehrere mobile Regale 7e in einem Schritt entladen. Dies kann wiederum durch Aneinanderkuppeln und insbesondere unter Verwendung eines Flurförderfahrzeugs 17c, 17d oder mit einer Seilwinde erfolgen. Grundsätzlich können die mobilen Regale 7e nach dem Entladen, wie zur Abgabestation 1b beschrieben, im zweiten Warenlagerbereich G1 abgestellt werden. Besonders vorteilhaft ist es aber auch, wenn die mobilen Regale 7e nach dem Entladen im zweiten Warenlagerbereich G5 und damit im Wirkungsbereich des Mehrebenen-Regalbediengeräts 22 abgestellt werden.

Mit Hilfe des Mehrebenen-Regalbediengeräts 22 können zu liefernde Waren 2a, 2b aus einem Regalfach 6 eines mobilen Regals 7n (Quell-Regal) entnommen und in ein Regalfach 6 eines anderen Regals abgelegt werden. Das andere Regal (also das Zielregal) kann das fixe Regal 24 sein oder aber auch ein anderes mobiles Regal 7n. Auch ein Umschlichten der Waren 2a, 2b von einem Regalfach 6 eines Regals 7n, 24 in ein anderes Regalfach 6 desselben Regals 7n, 24 ist natürlich möglich, sowie ein Umschlichten von einem Regalfach 6 eines fixen Regals 7n in ein anderes Regalfach 6 dieses oder eines anderen fixen Regals 7n.

Auf diese Weise können die Waren 2a, 2b so umverteilt werden, dass die mobilen Regale 7f..7n entweder leer oder nach Möglichkeit voll beladen sind. In diesem Fall können die leeren mobilen Regale 7f..7n gruppiert im zweiten Warenlagerbereich G1 oder im zweiten Warenlagerbereich G5 abgestellt werden, sodass das anschließende Beladen des Lastkraftwagens 18 rasch erfolgen kann. Besonders vorteilhaft ist es in diesem Zusammenhang, wenn die leeren mobilen Regale 7n im zweiten Warenlagerbereich G5 in Nähe des zweiten Tors 25 bei der zweiten Laderampe 26 abgestellt werden.

Die erste Laderampe 20 zur Übernahme der beladenen mobilen Regale 7e aus dem Lastkraftwagen 18 und die zweite Laderampe 26 zur Übergabe von leeren mobilen Regalen 7n in den Lastkraftwagen 18 sind hier auf einander gegenüberliegenden Seiten der Abgabestation 1c angeordnet, konkret an gegenüberliegenden Seiten der Schiene 23 des schienengebundenen Regalbediengeräts 22. Denkbar wäre auch das die beiden Laderampen 20 und 26 bezogen auf eine Transportrichtung einer Fördereinrichtung für die mobilen Regale 7e, etwa einer Seilwinde, einander gegenüberliegend angeordnet sind.

Auf diese Weise kann nicht nur das Entladen des Lastkraftwagens 18, sondern auch das Beladen auf besonders effiziente Weise erfolgen. Dazu werden die leeren mobilen Regale 7n wiederum einzeln oder in Gruppen in den Lastkraftwagen 18 befördert, insbesondere unter Zuhilfenahme eines Flurförderfahrzeugs 17c, 17d oder einer Seilwinde, so wie dies schon für die in der Fig. 4 dargestellte Abgabestation 1b im Detail beschrieben wurde.

Bei Verwendung von zwei Lastkraftwagen 18 kann das Entladen des ersten Lastkraftwagens 18 und das Beladen des zweiten Lastkraftwagens (nicht dargestellt) sogar simultan erfolgen. Beispielweise werden neue befüllte mobile Regale 7e an der ersten Laderampe 20 in die Abgabestation 1c hinein befördert und leere mobile Regale 7n im Selben Schritt in den zweiten Lastkraftwagen hinein befördert. Die mobilen Regale 7e aus dem ersten Lastkraftwagen 18 und die bereits in der Abgabestation 1c befindlichen mobilen Regale 7n im Wirkungsbereich des Regalbediengeräts 22 bilden dabei gleichsam eine Schlange aus mobilen Regalen 7e, 7n, die sich aus dem ersten Lastkraftwagen 18 hinaus und in den zweiten Lastkraftwagen hinein bewegt. Auf diese Weise kann das Ent- und Beladen auf besonders effiziente Weise erfolgen. Generell müssen bei diesem Vorgang nicht alle mobilen Regale 7e aus dem ersten Lastkraftwagen 18 in die Abgabestation 1c oder alle mobile Regale 7n aus der Abgabestation 1c in den zweiten Lastkraftwagen befördert werden. Es kann natürlich auch ein Teil der mobilen Regale 7e im ersten Lastkraftwagen 18 und/oder in der Abgabestation 1c verbleiben.

Werden die Waren 2a, 2b von einem mobilen Regal 7n in ein anderes mobile Regal 7n umgeschlichtet, so brauchen die Waren 2a, 2b für die Abgabe an den Öffnungen 4a, 4b natürlich nicht zuvor wieder in das mobile Regal 7n (Quell-Regal) geladen werden, in dem sich die Waren 2a, 2b ursprünglich befunden haben. Stattdessen kann direkt das mobile Ziel-Regal 7n in die Übergabeposition an den Öffnungen 4a, 4b gebracht werden. Das mobile Ziel-Regal 7n tritt also im Hinblick auf die Lagerung und die Abgabe der zu liefernden Waren 2a, 2b an die Stelle des mobilen Quell-Regals 7n. Dieser Vorgang kann beliebig oft rekursiv wiederholt werden, sodass ein mobiles Ziel-Regal 7n zu einem späteren Zeitpunkt selbst zum mobilen Quell-Regal 7n werden kann, und so weiter.

An dieser Stelle wird angemerkt, dass die Regale 7f..7n nicht alle (vollständig) leer sein müssen, sondern beispielsweise auch Retourware beinhalten können, die mit Hilfe des Lastkraftwagens 18 zurück zum Warenlager transportiert werden.

Das Mehrebenen-Regalbediengerät 22 kann auch noch einem anderen Zweck dienen. Waren 2a, 2b können von dem Mehrebenen-Regalbediengerät 22 direkt an der optionalen Übergabeöffnung 27 angedient werden, wenn eine anfordernde Person oder eine dieser zugeordnete Maschine für die Übernahme der Waren 2a, 2b berechtigt ist. Trifft dies zu, so wird die angeforderte Ware 2a, 2b an die Übergabeöffnung 27 transportiert und eine Zugangstür in der Übergabeöffnung 27 geöffnet. In diesem Fall entfällt das Transportieren des mobilen Regals 7f..7n in die Übergabeposition. Beispielsweise kann diese alternative Vorgangsweise gewählt werden, wenn sensible und/oder sperrige Waren abzugeben sind. Das Mehrebenen-Regalbediengerät 22 erfüllt dann nicht nur die Funktion eines Sortierroboters, sondern grundsätzlich auch die Funktion eines Abgaberoboters.

An dieser Stelle wird angemerkt, dass der Sortierroboter 22, der gegebenenfalls auch als Abgaberoboter fungiert, nicht notgedrungen als Regalbediengerät ausgeführt sein muss, sondern auch andere Bauformen vorstellbar sind. Beispielsweise kann der Sortierroboter 22 auch durch einen Mehrachsroboter und/oder Portalroboter gebildet sein oder diesen umfassen (vergleiche auch Fig. 16).

In den Figuren 1 und 2 wurde ein mobiles Regal 7 vorgestellt und in den in den Figuren 3 bis 5 präsentierten Anwendungsbeispielen verwendet, das auf einer Rückseite eine Regalfach-Abschlusswand 9 aufweist, wodurch das Regalfach 6 nur von einer Seite des mobilen Regals 7 zugänglich ist. Dies ist aber keineswegs die einzig vorstellbare Möglichkeit.

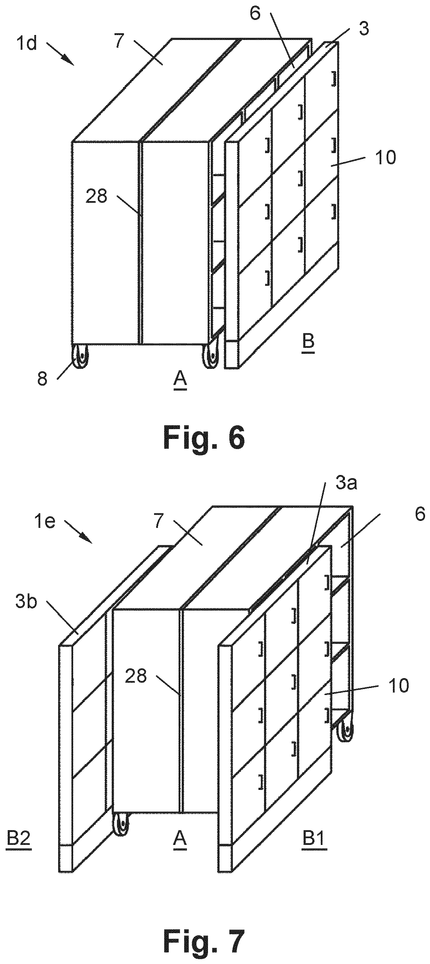

Fig. 6 zeigt ein Beispiel für ein alternatives mobiles Regal 7, das eine mittige Regalfach-Trennwand 28 aufweist, wobei beidseits der Regalfach-Trennwand 28 je zumindest ein Regalfach 6 angeordnet ist, das jeweils nur von einer Seite des mobilen Regals 7 zugänglich ist. Je nachdem in welchem der Regalfächer 6 angeforderte Ware 2 lagert, wird das mobile Regal 7 mit der Vorderseite oder der Rückseite in die Übergabeposition gebracht. Die Regalfach-Trennwand 28 verhindert unter anderem, dass ein Zugriff einer Person in ein ihr nicht zugeordnetes Regalfach 6 erfolgen kann.

Die Abgabestation 1d umfasst in diesem Beispiel kein direkt an den Öffnungen 4 angeordnetes Warenabgabesystem 5. Dieses kann, wie in den Figuren 4 und 5 dargestellt, an einer anderen Stelle angeordnet und mit den Türen 10 wirkverbunden sein.

Fig. 7 zeigt eine weitere alternative Ausführungsvariante einer Abgabestation 1e, die der in Fig. 6 gezeigten Variante weitgehend ähnlich ist. Im Unterschied dazu sind aber zwei Trennwände 3a, 3b vorgesehen, welche den ersten Warenlagerbereich A und die Kundenzugangsbereiche B 1, B2 voneinander trennen und jeweils mehrere verschließbare Öffnung 4 aufweisen. Die Türen 10 in den beiden Trennwänden 3a, 3b werden in der schon beschriebenen Weise vom Warenabgabesystem 5 angesteuert.

Die Bauweise der Abgabestation 1e eignet sich insbesondere für kleinere Bauwerke. Insbesondere kann die Abgabestation 1e im Wesentlichen einen U-förmigen Grundriss aufweisen, in den ein mobiles Regal 7 oder mehrere mobile Regale 7 passen, und ansonsten ein Zugangstor und ein Dach aufweisen. Haben mehrere mobile Regale 7 in der Abgabestation 1e Platz, so brauchen diese für die Abgabe von Waren 2 nicht bewegt werden, sondern werden nur beim Be- und Entladen der Abgabestation 1e bewegt. In diesem Fall erstrecken sich die Öffnungen 4 nicht nur über ein mobiles Regal 7, sondern über mehrere mobile Regale 7.

Selbstverständlich eignet sich die für die Abgabestation 1e vorgestellte Bauweise auch für einseitig zugängliche mobile Regale 7. An der Rückseite des mobilen Regals 7 braucht das Gebäude dann aber nur eine normale Wand ohne Öffnungen 4 aufzuweisen (vergleiche die Figuren 1 und 2).

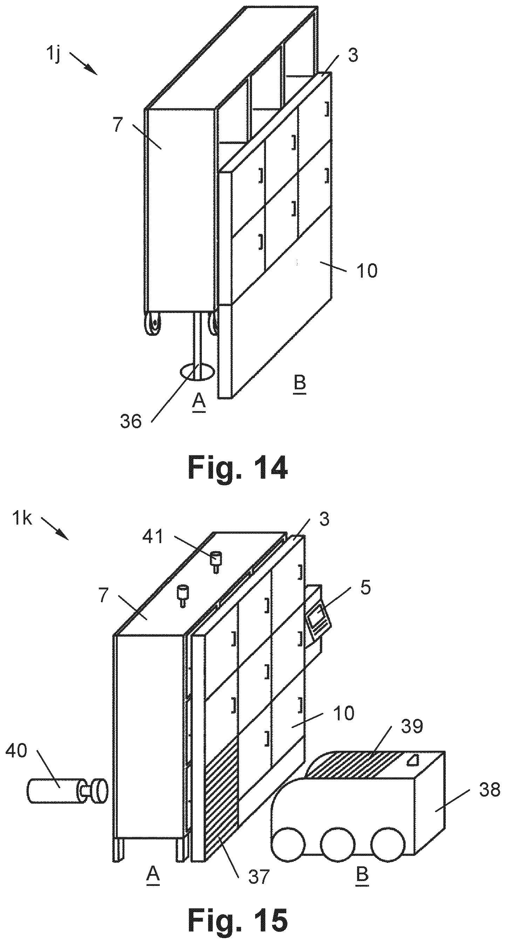

Fig. 8 zeigt ein Ausführungsbeispiel einer Abgabestation 1f, welche zwei bodenseitige Schienen 29 aufweist, in denen die Räder 8 des mobilen Regals 7 geführt werden, sowie eine oben angeordnete Führungsschiene 30. Beides verhindert, dass das mobile Regal 7 unerlaubt oder ungewollt von der Trennwand 3 weggeschoben werden kann. Selbstverständlich kann die Abgabestation 1f auch nur bodenseitige Führungsschienen 29 aufweisen oder nur die oben angeordnete Führungsschiene 30, und die Führungsschienen 29, 30 können auch eine andere Form aufweisen. Alternativ zu den Führungsschienen 29 und/oder der Führungsschiene 30 können bewegte Regalhalter oder Regalfixierer eingesetzt werden (vergleiche Fig. 15).

Fig. 9 zeigt ein Beispiel, bei dem das mobile Regal 7 von einem Flurförderfahrzeug 31 einer Abgabestation 1g in die Übergabeposition geschoben oder gezogen wird. Das mobile Regal 7 weist dazu eine Kupplung 32 auf, welche in der Fig. 10 dargestellt ist, in der sich das mobile Regal 7 bereits in der Übergabeposition befindet und das Flurförderfahrzeug 31 den ersten Warenlagerbereich A verlassen hat. Das Flurförderfahrzeug 31 weist ebenfalls eine optionale Kupplung auf, mit der das mobile Regal 7 temporär an das Flurförderfahrzeug 31 gekoppelt werden kann. In gleicher Weise können auch mehrere mobile Regale 7 miteinander gekoppelt werden, insbesondere wenn sie auf beiden Seiten Kupplungen 32 aufweisen. Auf diese Weise kann beispielsweise der Be- und Entladevorgang eines Lastkraftwagens 18 beschleunigt werden, so wie dies im Zusammenhang mit den Figuren 4 und 5 bereits weiter oben beschrieben wurde. Aber auch die Manipulation innerhalb der Abgabestationen 1a..1g kann dadurch vereinfacht werden.

Fig. 11 zeigt ein weiteres Ausführungsbeispiel, bei dem ein Flurförderfahrzeug 33a anderer Bauart in einer Abgabestation 1h zur Anwendung kommt. Konkret umfasst das Flurförderfahrzeug 33a eine Hubgabel 34, welche Teil eines Hubwerks ist und mit der das mobile Regal 7 zur Beförderung angehoben werden kann. Das Hubwerk kann statt der Hubgabel 34 oder zusätzlich dazu beispielsweise auch einen Hubstempel umfassen. Die Räder 8 sind bei diesem mobilen Regal 7 daher durch Regalsteher beziehungsweise Regalfüße 35 ersetzt. Selbstverständlich kann aber auch ein mobiles Regal 7 mit Rädern 8 durch das Flurförderfahrzeug 33a transportiert werden. Dieses muss dann nicht notgedrungen immer angehoben werden, sondern kann auch geschoben werden. Das Flurförderfahrzeug 33a ist von ähnlicher Bauart wie jene Flurfördergeräte 17a..17d, welche in den Figuren 3 bis 5 symbolisch dargestellt sind.

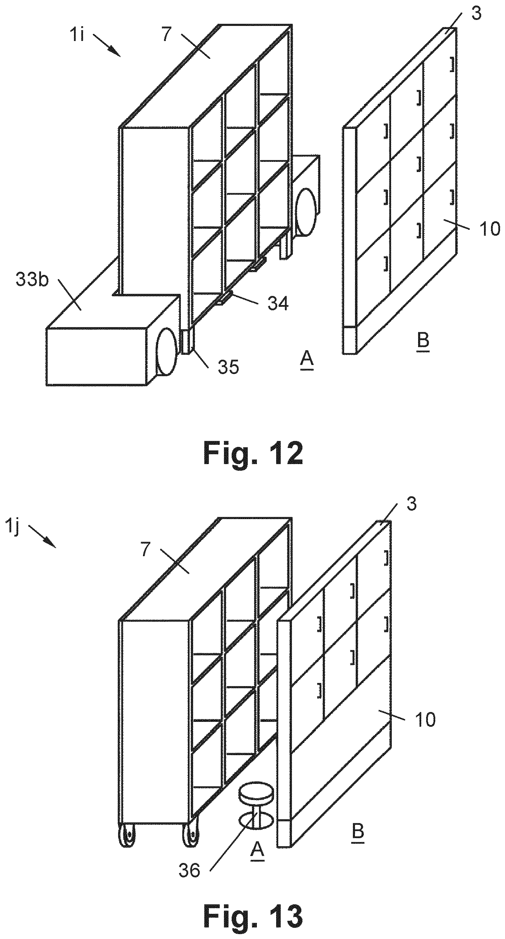

Fig. 12 zeigt eine Bauweise eines Flurförderfahrzeug 33b einer Abgabestation 1i, welches dem in Fig. 11 dargestellten Flurförderfahrzeug 33b sehr ähnlich ist. Im Unterschied dazu fährt es aber in Längsrichtung des mobilen Regals 7. Selbstverständlich können die in den Figuren 9 bis 12 dargestellten Flurförderfahrzeuge 31, 33a und 33b in beliebiger Kombination in einer Abgabestation 1a..1i verwendet werden.

Die Figuren 13 und 14 zeigen ein Beispiel einer Abgabestation 1j, welche eine im ersten Warenlagerbereich A angeordnete Hubeinrichtung 36 für das mobile Regal 7 umfasst. Mit Hilfe der Hubeinrichtung 36 kann das mobile Regal 7 vertikal in eine Übergabeposition oder auch in verschiedenen Übergabepositionen bewegt werden, so wie dies in Fig. 14 dargestellt ist.

Dies ist insbesondere dann von Vorteil, wenn sich der von den Öffnungen 4 belegte Bereich in der Trennwand 3 vertikal weniger hoch erstreckt als die Regalfächer 6 des mobilen Regal 7 hoch sind. In dem in den Figuren 13 und 14 dargestellten Beispiel ist beispielsweise die unterste Reihe an Öffnungen 4 gegenüber den bisherigen Darstellungen weggelassen, wodurch ein Bücken zur Übernahme der Waren 2 entfällt.

Die vorgeschlagene Vorgangsweise kann sinngemäß auch angewandt werden, wenn sich der von den Öffnungen 4 belegte Bereich in der Trennwand 3 horizontal weniger weit erstreckt als die Regalfächer 6 des mobilen Regal 7 breit sind. In diesem Fall bedarf es aber keiner eigenen Hubeinrichtung 36, sondern das mobile Regal 7 wird horizontal entsprechend verschoben (vergleiche auch die Öffnungen 4b in der Fig. 4).

Die Hubeinrichtung 36 kann eine beispielsweise mittels Hydraulikzylinder, Pneumatikzylinder oder elektrischem Spindelmotor betätigte Hubplattform umfassen.

Fig. 15 zeigt eine weitere Ausführungsvariante einer Abgabestation 1k, welche zum Beispiel der in den Figuren 1 und 2 dargestellten Abgabestation 1a ähnlich ist. Im Unterschied dazu weist diese aber nun ein Rolltor 37 auf, welches den Zugang zu dem dahinterliegenden Regalfach 6 freigibt oder nicht. Vor dem Rolltor 37 hat in dem dargestellten Beispiel ein autonomes, fahrbares Fahrzeug 38, das als für die Übernahme von Waren ausgebildete Maschine fungiert, angehalten. Dieses Fahrzeug 38 meldet sich bei dem Warenabgabesystem 5 an, vorzugsweise drahtlos, und fordert die Übergabe der dem Fahrzeug 38 respektive seinem Besitzer zugeordnete Waren 2 an. Wenn die Berechtigung für die Übernahme der Waren 2 für das Fahrzeug 38 respektive für die zugeordnete Person vorliegt, dann wird das Rolltor 37 geöffnet.

In den vorliegenden Fall besitzt das Fahrzeug 38 keine Mittel zur Übernahme der Waren, wie etwa einen Greifer oder ähnliches. Zur Übernahme der Waren wird bloß ein Laderaum geöffnet, im gezeigten Beispiel mit Hilfe des Rolltors 39.

Zum Verladen der Waren 2 in das Fahrzeug 38 umfasst die Abgabestation 1k einen Ausstoßer 40, welcher dazu ausgebildet ist, die in dem Regalfach 6 befindlichen Waren 2 durch die verschließbare Öffnung 4 der Trennwand 3 hindurch zu bewegen, insbesondere zu schieben. Dazu wird der Ausstoßer 40 vom Warenabgabesystem 5 entsprechend angewiesen, wenn das Fahrzeug 38 zur Übernahme der Waren berechtigt ist und erkannt wird, dass das Fahrzeug 38 über keinen eigenen Lademechanismus verfügt. Der Ausstoßer 40 ragt beim Ausstoßen durch eine Öffnung in der Rückwand 9 des mobilen Regals 7 hindurch. Die Öffnung in der Rückwand 9 kann auch so ausgebildet sein, dass sie nur beim Ausstoßen der Waren 2 geöffnet, ansonsten aber geschlossen ist. Beispielsweise kann eine motorisch betriebene Klappe an der Rückwand 9 angeordnet sein, oder die Klappe wird direkt durch den Ausstoßer 40 betätigt.

Der Ausstoßer 40 kann aus den oben genannten Gründen auch als einfache Form eines Verladeroboters angesehen werden. Der Ausstoßer 40 kann beispielsweise als Hydraulikzylinder, Pneumatikzylinder oder elektrischer Spindelmotor ausgebildet sein oder einen solchen umfassen.

Zusätzlich weist die Abgabestation 1k optionale Regalhalter 41 auf, mit denen das mobile Regal 7 an der Übergabeposition lagefixiert werden kann. Beispielsweise greifen diese in Ausnehmungen im mobilen Regal 7 ein oder drücken dieses einfach zu Boden. Die Regalhalter 41 können insbesondere anstelle der in der Fig. 8 dargestellten Schienen 29, 30 vorgesehen und wiederum als Hydraulikzylinder, Pneumatikzylinder oder elektrische Spindelmotoren ausgebildet sein. Deren Anwendung ist natürlich nicht an das Vorhandensein eines Rolltors 37 oder eines Ausstoßers 40 gebunden, sondern die Regalhalter 41 können auch in anderen Bauformen einer Abgabestation 1a.. 1j eingesetzt werden.

Fig. 16 zeigt eine Ausführungsform einer Abgabestation 11, welche der in Fig. 15 dargestellten Abgabestation 1k sehr ähnlich ist. Im Unterschied dazu, ist als Verladeroboter jedoch beispielhaft ein Mehrachsroboter 42 mit Greifer vorgesehen. Alternativ können natürlich auch andere Bauformen als Verladeroboter zum Einsatz kommen, beispielsweise Portalroboter. Wie bereits zu Fig. 15 beschrieben, öffnet das Warenabgabesystem 5 das Rolltor 37, wenn das autonome Fahrzeug 38 respektive sein Besitzer zur Übernahme der Waren 2 berechtigt ist. In diesem Beispiel wird das autonome Fahrzeug 38 aber nicht mit Hilfe eines Ausstoßers 40 beladen, sondern das autonome Fahrzeug 38 fährt durch die nunmehr freigegebene Öffnung 4 in der Trennwand 3 hindurch in das Innere der Abgabestation 11 zu einem dafür vorgesehenen Parkplatz. Dort werden die angeforderten Waren 2 von dem Mehrachsroboter 42 aus dem mobilen Regal 7 entnommen und in das autonome Fahrzeug 38 geladen. Das mobile Regal 7 ist dazu seitlich offen, so wie das in der Fig. 16 dargestellt ist.

In analoger Weise wäre grundsätzlich auch vorstellbar, dass das autonome Fahrzeug 38 durch das Rolltor 37 der in Fig. 15 dargestellten Abgabestation 1k hindurch zu einem dafür vorgesehenen Parkplatz fahren kann, wenn die Öffnung 4 nicht durch ein mobiles Regal 7 blockiert ist. Der Verladeroboter 42 muss sich demzufolge nicht nahe an einer Übergabeposition für die Öffnungen 4 befinden, sondern kann grundsätzlich irgendwo in der Abgabestation 1k aufgestellt sein. Für die Übernahme von Waren 2 fährt das autonome Fahrzeug 38 dann an einen weiter im Inneren der Abgabestation 1k gelegenen Parkplatz vor.

Insbesondere kann der Verladeroboter 42 auch durch den in Fig. 5 dargestellten Sortierroboter 22 gebildet sein. Der Sortierroboter 22 kann ja, wie zu Fig. 5 beschrieben, grundsätzlich auch die Funktion eines Abgaberoboters übernehmen, welche der Funktion eines Verladeroboter 42 sehr ähnlich ist. Somit können mehrere der Funktionen: Sortierroboter, Abgaberoboter und/oder Verladeroboter von einem (einzigen) Roboter erledigt werden. Beispielsweise kann der oben erwähnte Parkplatz für das autonome Fahrzeug 38 in der Fig. 5 im Wirkungsbereich des Regalbediengeräts 22 liegen.

Die Abgabestation 11 weist neben den bereits erwähnten Bauelementen auch eine optionale Landeplattform 43 für eine als Flugdrohne 44 ausgebildete Maschine für die Übernahme der Waren 2 auf. Die Beladung erfolgt in der schon beschriebenen Weise durch den Mehrachsroboter 42. Insbesondere kann vorgesehen sein, dass die Landeplattform 43 vertikal verfahrbar ist, und die Flugdrohne 44 solcherart in das Innere der Abgabestation 1k bewegt werden kann. Grundsätzlich wäre auch denkbar, dass die Flugdrohne 44 zu einem Landeplatz im Inneren der Abgabestation 1k fliegt oder zu einem Parkplatz im Inneren der Abgabestation 1k fährt (sofern die Flugdrohne 44 über ein Fahrwerk verfügt) oder gefahren wird. Die weiter oben offenbarte technische Lehre im Zusammenhang mit der Beladung autonomer Fahrzeug 38 ist dann sinngemäß anzuwenden.

Die in Fig. 16 dargestellte Abgabestation 11 ist für die Beladung von autonomen Fahrzeugen 38 und für die Beladung von Flugdrohnen 44 ausgebildet. Selbstverständlich kann die Abgabestation 11 aber auch nur für die Beladung von autonomen Fahrzeugen 38 oder auch nur für die Beladung von Flugdrohnen 44 ausgebildet sein, und selbstverständlich können für die Beladung von Fahrzeugen 38 von ihrer Bauart her andere Verladeroboter 42 zum Einsatz kommen als für die Beladung von Flugdrohnen 44.

Generell ist es von Vorteil, wenn die Abgabestation 11 zumindest zwei Elemente aus der Gruppe: verschließbare Öffnung 4, Verladeroboter 42, Zufahrtstor 37 für ein autonomes Fahrzeug 38, Landeplatz 43 für eine Flugdrohne 44 umfasst, so wie das in der Fig. 16 dargestellt ist. Die Abgabestation 11 ist dann besonders flexibel einsetzbar.

Fig. 17 zeigt schließlich eine Bauform eines autonomen, mobilen Regals 7. Dieses ist mit angetriebenen (sowie gegebenenfalls gebremsten) Rollen 8a sowie mit lenkbare Rollen 8b ausgestattet. Die angetriebenen Rollen 8a verfügen beispielsweise über einen Nabenmotor, welcher mit einer Fahrsteuerung 45 verbunden ist. Ebenso ist ein Lenkmotor 46 mit der Fahrsteuerung 45 verbunden. Weiterhin ist die Fahrsteuerung 45 mit Sensoren zur Orientierung im Raum verbunden, im konkreten Fall mit den Ultraschallsensoren 47a und 47b, mit einem Laserscanner 48 und einem Triangulationsempfänger 49, welcher beispielsweise GPS-Signale und/oder Indoor-GPS-Signale empfangen kann. Das beschriebene System wird elektrisch mit einem Akkumulator 50 versorgt. Alternativ oder zusätzlich könnte das mobile Regal 7 auch eine Kamera und/oder einen Magnetfeldsensor umfassen.

Mit dem beschriebenen System ist eine autonome Bewegung des mobilen Regals 7 möglich. Das Verfahren zur Steuerung autonomer Fahrzeuge ist grundsätzlich bekannt und wird hier nicht im Detail beschrieben. Insbesondere kann für das mobile Regal 7 das gleiche oder ein ähnliches Verfahren angewandt werden wie für die Flurförderfahrzeuge 17a..17d, 31, 33a und 33b. Da sich das in Fig. 17 vorgestellte mobile Regal 7 autonom bewegt, können Flurförderfahrzeuge 17a..17d, 31, 33a und 33b in den in den Figuren 3 bis 5 dargestellten Anordnungen entfallen, oder diese können Spezial- oder Assistenzaufgaben übernehmen.

Insbesondere kann vorgesehen sein, dass das autonome mobile Regal 7
- in einen Lastkraftwagen 18 fährt und/oder
- aus einem Lastkraftwagen 18 fährt und/oder
- in eine Übergabeposition im ersten Warenlagerbereich A, A2, A2 fährt und/oder
- in einen zweiten Warenlagerbereich G1..G5 fährt.

Selbstverständlich kann das mobile Regal 7 auch so ausgebildet sein, dass es teilautonom agieren kann. Beispielsweise kann vorgesehen sein, dass das mobile Regal 7 nur angetriebene Rollen 8a aufweist, jedoch keine aktiv lenkbaren Rollen 8b. Auf diese Weise wird eine Person oder ein Flurförderfahrzeug 17a..17d, 31, 32, 35 beim Manipulieren des mobilen Regals 7 im Hinblick auf geringere Antriebskräfte entlastet.

Das mobile Regal 7 kann aber auch nur aktiv lenkbare Rollen 8b aufweisen, jedoch keine angetriebene Rollen 8a. Auf diese Weise kann das mobile Regal 7 aktiv in eine vorgegebene Richtung steuern und so das Lenken des mobilen Regals 7 durch eine Person oder ein Flurförderfahrzeug 17a..17d, 31, 33a, 33b unterstützen. Dies ist insbesondere dann von Vorteil, wenn mehrere mobile Regale 7 zu einem Verbund zusammengekoppelt werden, so wie dies schon für das Be- und Entladen eines Lastkraftwagens 18 vorgestellt wurde. Selbstverständlich können die mobilen Regale 7 aber auch bei einer anderen Manipulation aneinander gekoppelt werden, beispielsweise wenn mehrere mobile Regale 7 in einen ersten Warenlagerbereich A, A2, A2 oder einen zweiten Warenlagerbereich G1..G5 bewegt werden sollen.

Grundsätzlich ist, wie bereits erwähnt wurde, eine Abgabestation 1a..1l ohne Flurförderfahrzeuge 17a..17d, 31, 33a, 33b vorstellbar. Diese umfasst dann im Wesentlichen nur die Trennwand 3 mit den verschließbaren Öffnungen 4, 4a, 4b. Diese kann im Innenbereich oder Au-ßenbereich (beispielsweise integriert in ein kleines Gebäude) aufgestellt sein. Vorstellbare Anwendungsfälle sind Post, Zustelldienste und Lebensmittelhändler, insbesondere auch Tankstellen.

Zum Beispiel kann via Internet ein Einkauf in einer Lebensmittefiliale bestellt werden, der von einer Mitarbeiterin in ein mobiles Regal 7, 7a..7m kommissioniert wird (z.B. wenn gerade weniger zu tun ist) und in einer Abgabestation 1a..1l bereitgestellt wird, die auch außerhalb der Ladenöffnungszeiten zugänglich ist. Die von einer Person getätigte Bestellung, beispielsweise online, wird als Auftrag im Auftragsverwaltungssystem (Rechner) erfasst. Die Abgabestation 1a..1l kann klimatisiert sein, um die Waren frisch zu halten. Bestellungen, etwa vor Mittag, können rabattiert sein, um die Kunden zu rechtzeitigen Bestellungen zu animieren. Ein Lebensmittelhändler kann zum Beispiel auch eine durch eine Abgabestation 1a..1l gebildete Jausenstation an einem Bahnhof befüllen. Die Fächer 6 können fix zugeteilt sein, oder der Kunde bekommt bei Auftragserstellung eine Fachnummer zugeteilt. Die Türen 10 können zum Beispiel via Near-Field-Communication (kurz NFC) oder Bluetooth entriegelt werden. Auch ein Touchscreen pro Fachtür 10 ist vorstellbar.

Anstatt die mobilen Regale 7, 7a..7m mit Rollen 8 auszustatten, kann auch der Lastkraftwagen 18 beziehungsweise der Boden der Abgabestation 1a..1l mit einem Rollenboden ausgestattet sein. Denkbar wäre auch, dass die mobilen Regale 7, 7a..7m hängend an einem Schienensystem befördert werden, insbesondere mit einem Hängeförderer.

Die in den Figuren gezeigten mobilen Regale 7, 7a..7m weisen mehrere übereinander und nebeneinander angeordnete Regalfächer 6 auf. Konkret weisen die genannten Regale 7, 7a..7m jeweils drei mal drei Fächer 6 auf. Selbstverständlich sind auch andere Aufteilungen und Formen vorstellbar. Beispielsweise können nur übereinander oder nur nebeneinander angeordnete Regalfächer 6 vorgesehen sein. Dementsprechend kann auch die Trennwand 3, 3, 3b mehrere übereinander und/oder nebeneinander angeordnete verschließbare Öffnungen 4, 4a, 4b aufweisen Insbesondere können die Fächer 6 auch unterschiedlich groß ausgebildet sein. Generell kann ein Regal 7, 7a..7m mehrere Aufträge aufnehmen. So kann jedem Regalfach 6 ein einziger Auftrag zugeordnet werden, und/oder es kann mehr als einem Regalfach 6, beispielsweise zwei Regalfächern 6, einer von mehreren Aufträgen zugeordnet werden.

Die mobilen Regale 7, 7a..7m können auch frei konfigurierbar sein, das heißt es können Seitenwände, Rückwände oder auch Regalböden entnommen und hinzugefügt werden, um das mobile Regal 7, 7a..7m optimal an die vorliegenden Aufträge anpassen zu können. Dadurch können kleine Waren 2 effizient im mobilen Regal 7, 7a..7m aufgenommen werden, und auch die bedarfsweise Lagerung langer Waren kann so ermöglicht werden. Ein mobiles Regal 7, 7a..7m kann auch aus einzelnen Modulen aufgebaut sein.

Darüber hinaus können auch die Türen 10 an den Trennwänden 3 teilweise gemeinsam öffnen, um mehrere Regalfächer 6 oder größere Regalfächer 6 freizugeben. Beispielsweise können mehrere Türen 10 mit vertikaler Schwenkachse oder auch horizontaler Schwenkachse bei einem Auftrag gemeinsam öffnen. Denkbar sind auch paarweise links- und rechts beziehungsweise oben und unten angeschlagene Türchen 10, die bedarfsweise gemeinsam geöffnet werden.

Denkbar ist auch der Einsatz von zumindest zwei (aber auch mehr) Schiebetüren, die horizontal bewegt werden und beliebig große Zugangsbereiche an beliebiger Position ermöglichen. Gleichermaßen sind auch vertikale Schiebetüren möglich. Auch die Kombination hintereinanderliegender horizontaler und vertikaler Schiebetüren ist möglich. In der Schiebetür können auch individuell aktivierbare Gitterstäbe integriert sein, um den Zugangsbereich in der anderen Dimension zu limitieren. Anstelle von Schiebetüren können zu demselben Zweck auch Rollwände/-tore vorgesehen sein.

Die Form beziehungsweise der geometrische Aufbau eines mobilen Regals 7, 7a..7m (insbesondere eines mobilen Regals, das aus Modulen flexibel zusammengestellt ist) kann beispielsweise optisch durch einen vertikal ausgerichteten (optischen) Linienscanner ermittelt werden, an der das mobile Regal 7, 7a..7m horizontal vorbeibewegt wird. Selbstverständlich kann das Regal 7, 7a..7m in analoger Weise auch vertikal an einem horizontal ausgerichteten (optischen) Linienscanner vorbeibewegt werden. Auch eine Tiefenmessung eines mobilen Regals 7, 7a..7m ist möglich.

Denkbar wäre auch, dass das mobile Regal 7, 7a..7m selbst Informationen über seine Form / seinen geometrischen Aufbau, speichert und dem Warenabgabesystem 5 mitteilt. Denkbar wäre beispielsweise, dass sich an einem Regalrahmen Schaltkontakte für entnehmbare Wände befinden, um zu ermitteln, wo sich eine Regalwand befindet und wo nicht. Denkbar wäre auch der Einsatz von Mikrochips, die an Regalmodulen befestigt sind und Informationen über die Form / den geometrischen Aufbau des betreffenden Regalmoduls speichern.

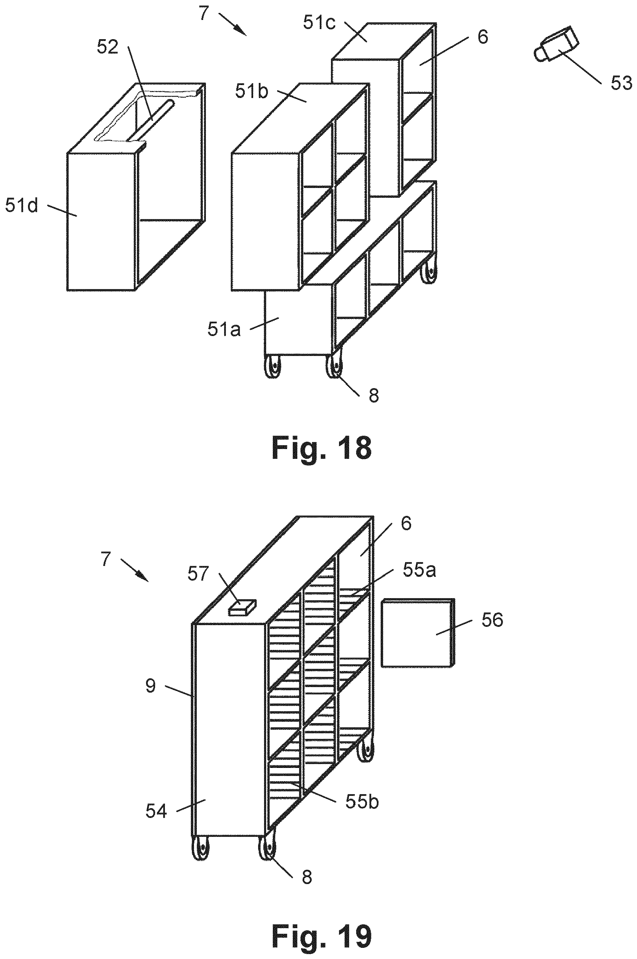

Fig. 18 zeigt in diesem Zusammenhang ein mobiles Regal 7, das mehrere untereinander verbindbare Regalmodule 5 1a..51d mit Regalfächern 6 unterschiedlicher Größe aufweist. Konkret ist in der Fig. 18 ein erstes Modul 51a mit 1x3 Regalfächern 6 dargestellt, das auf Rollen 8 montiert ist oder diese aufweist und auf das ein zweites Modul 51b mit 2x2 Fächern 6 und ein drittes Modul 51c mit 2x1 Fächern 6 aufgesetzt ist. Beispielsweise können die Module 51..51c durch eine werkzeuglos herstellbare und lösbare Steckverbindung zusammengefügt sein. Selbstverständlich ist die dargestellte Aufteilung der Fächer 6 rein illustrativ zu sehen, und es sind auch viele andere Ausführungsformen denkbar. Insbesondere kann auch ein zweiseitig zugängliches Regal 7 aus Modulen aufgebaut sein (vergleiche Fig. 6). Die Fächer 6 sind in diesem Beispiel gleich groß ausgebildet, sie könnten aber auch unterschiedlich groß sein.

In der Fig. 18 ist zusätzlich zum zweiten Modul 51b ein alternatives, viertes Modul 51d dargestellt, das nicht vier Fächer 6 sondern ein großes Fach 6 mit einer Hängestange 52 aufweist, an der Hängewaren oder Hängetaschen aufgehängt werden. Der Einsatz einer Hängestange 52 ist dabei nicht an die Verteilung an Kleidungsstücke gebunden, sondern in Hängetaschen können auch Waren 2 allgemeiner Art enthalten sein. Insbesondere können die Hängetaschen als Einweg-Hängetaschen ausgebildet sein, die vom Kunden bei der Abholung der Waren 2 mitgenommen werden können. Die Hängetasche kann aber auch für den Kunden unlösbar an der Hängestange 52 befestigt sein, sodass der Kunde nur die Waren 2 mitnehmen kann.

Ganz allgemein ist der Einsatz einer Hängestange 52 selbstverständlich nicht auf das vierte Modul 51d beschränkt, sondern eine Hängestange 52 kann in sämtlichen im Rahmen der Erfindung anwendbaren und beschriebenen Regalen 7 eingesetzt werden. Insbesondere kann auch vorgesehen sein, dass das Regal 7 nur eine einzige Hängestange 52 aufweist.

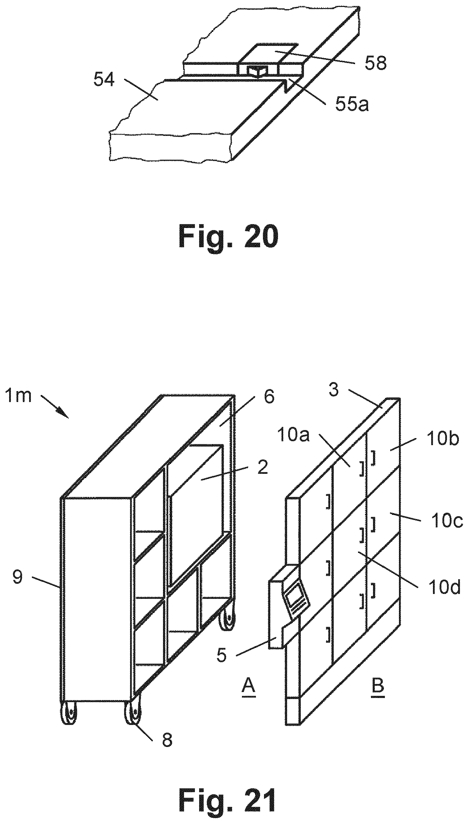

In der Fig. 18 ist zusätzlich eine Kamera 53 dargestellt, welche von der der Abgabestation 1a..1l umfasst ist und mit der die Form beziehungsweise die Geometrie des Aufbaus des individuell zusammengestellten Regals 7 erfasst werden kann. Informationen über die besagte Form können beispielsweise dem Warenabgabesystem 5 weiter gemeldet werden, welche diese in Folge verwenden kann, um Öffnungen 4 in der Trennwand 3 individuell freizugeben (vergleiche dazu die in den Figuren 21 bis 29 dargestellten Ausführungsformen). Anstelle der Kamera 53 oder zusätzlich dazu können auch andere optische Erfassungseinrichtungen und Tiefenmesseinrichtungen zur Erfassung der Form / Geometrie des Aufbaus des Regals 7 vorgesehen sein.

Fig. 19 zeigt eine weitere Ausführung eines Regals 7, das individuell konfigurierbare Regal-Trennwände und Fachböden beziehungsweise Regalböden aufweist. Dazu sind in einem Grundkörper 54 Nuten 55a vorgesehen, in welche die Regal-Trennwände individuell eingeschoben werden können, und Nuten 55b, in welche die Fachböden individuell eingeschoben werden können. Rein beispielhaft ist in der Fig. 19 in diesem Zusammenhang die Regal-Trennwand 56 dargestellt. Denkbar ist, dass das Regal 7 einen elektronischen Speicher respektive eine elektronische Schaltung 57 aufweist, in welchem/welcher Informationen über die Form / Geometrie des Aufbaus des mobilen Regals 7 gespeichert sind. Beispielsweise könnten im Bereich der Nuten 55a Schalter 58 vorgesehen sein, mit denen detektiert werden kann, ob eine Regal-Trennwand 56 in die betreffende Nut 55a eingeschoben ist oder nicht, so wie dies in der Fig. 20 dargestellt ist. Diese Information wird drahtgebunden oder über Funk an die elektronische Schaltung 57 weitergeleitet, die sie dann beispielsweise dem Warenabgabesystem 5 bereitstellt. Das Warenabgabesystem 5 kann diese Information in Folge wiederum dazu verwenden, um Öffnungen 4 in der Trennwand 3 individuell freizugeben (vergleiche dazu die in den Figuren 21 bis 29 dargestellten Ausführungsformen). Die Schalter 58 sind natürlich nicht auf die Nuten 55a für die Trennwände 56 beschränkt, sondern können in gleicher Weise auch in den Nuten 55b für die Fachböden vorgesehen sein oder auch für Hängestangen 52. Anstelle der Nuten 55a, 55b könnten auch Halteleisten oder Haltestifte für die Trennwände 56 und Fachböden vorgesehen sein.

An dieser Stelle wird angemerkt, dass auch die Form beziehungsweise die Geometrie des Aufbaus des in der Fig. 19 dargestellten Regals 7 optisch erfasst werden kann, beispielsweise mit einer Kamera 53, so wie dies in der Fig. 18 dargestellt ist oder auch mit Tiefenmesssensoren. Ein elektronischer Speicher / eine elektronische Schaltung 57 sowie Schalter 58 können dann entfallen. Umgekehrt kann ein elektronischer Speicher / eine elektronische Schaltung 57 auch für das in der Fig. 18 dargestellte Regal 7 angewandt werden, wodurch die Kamera 53 entfallen kann.

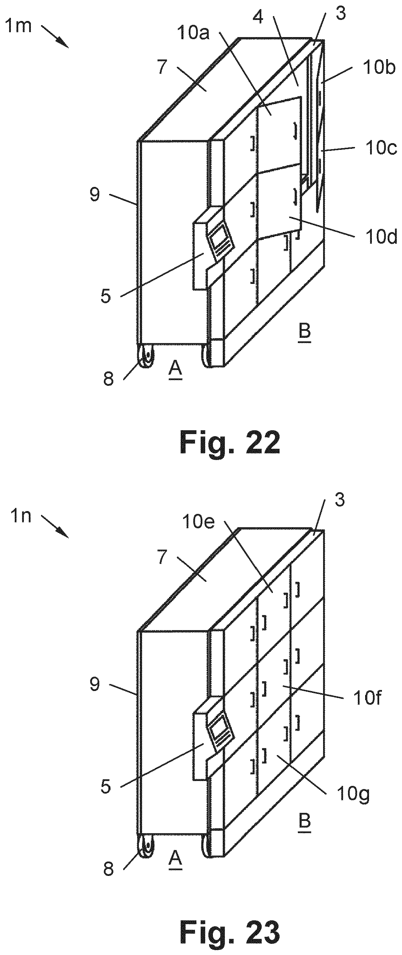

Im Zusammenhang mit frei konfigurierbaren Trennwänden 3 zeigen die Figuren 21 und 22 ein erstes Beispiel einer Abgabestation 1m, bei dem das Warenabgabesystem 5 dazu ausgebildet ist, eine zusammenhängende Öffnung 4 variabler Größe individuell und abhängig von der Anforderung zur Übernahme der Waren 2 freizugeben. Die Fig. 21 zeigt die Anordnung mit einem etwas beabstandet vor einer Trennwand 3 positionierten Regal 7, die Fig. 22 mit geöffneten Schwenktüren 10a, 10d und mit dem mobilen Regal 7 in Übergabeposition.

Konkret sind die im rechten Bereich der Trennwand 3 vorgesehenen Schwenktüren 10a..10d, welche Verschlusselemente für die Öffnung 4 bilden, paarweise gegenüberliegend angeschlagen. Das heißt, die Schwenkachse der linken Tür 10a, 10d eines Türenpaars ist auf der linken Seite der Tür 10a, 10d angeordnet, und die Schwenkachse der rechten Tür 10b, 10c eines Türenpaars ist auf der rechten Seite der Tür 10b, 10c angeordnet.

Das Warenabgabesystem 5 ist darüber hinaus dazu ausgebildet, bei einer Anforderung zur Übernahme der Waren 2 mehrere benachbarte, dieser Anforderung zugeordnete Schwenktüren 10a..10d freizugeben. In dem konkreten Beispiel wird angenommen, dass die Schwenktüren 10a..10d einem Auftrag zugeordnet sind und bei einer Anforderung zur Herausgabe der Waren 2 gemeinsam geöffnet werden. Dadurch wird eine relativ große, zusammenhängende Öffnung 4 freigeben und der Zugang zu einem relativ großen, dem Auftrag zugeordneten Regalfach 6 ermöglicht (siehe Fig. 22). Auf diese Weise, können verschieden große Öffnungen 4 für verschieden große Waren 2 freigegeben werden. Im gezeigten Beispiel können die Türen 10a..10d einzeln freigegeben werden, paarweise nebeneinander, paarweise übereinander oder auch alle vier gemeinsam - je nach Größe des dahinter liegenden Regalfachs 6. Auch die Freigabe einer L-förmigen Öffnung 4 wäre möglich. Durch Einbindung der ganz unten angeordneten Türen kann in dem dargestellten Beispiel auch eine 3x1-Öffnung oder eine 3x2-Öffnung freigegeben werden.

In dem gezeigten Beispiel sind die Schwenkachsen der Schwenktüren 10a..10d vertikal angeordnet, es könnte aber auch vorgesehen sein, das die in einer Trennwand 3 angeordneten Schwenktüren 10a..10d horizontal oder gemischt vertikal und horizontal ausgerichtet sind.

Fig. 23 zeigt schließlich ein Beispiel einer Abgabestation 1n, bei dem die mittleren Schwenktüren 10e..10g bedarfsweise nach links oder nach rechts geöffnet werden können und die demnach auf beiden Seiten Griffe aufweisen. Beispielsweise sind die Schwenkachsen der Schwenktüren 10e..10g durch verschiebbare Bolzen gebildet, die vom Warenabgabesystem 5 angesteuert werden. Auf diese Weise kann beispielsweise die in der Fig. 22 dargestellte Öffnung 4 freigegeben werden, wenn die linken Schwenkachsen der Schwenktüren 10e und 10f aktiviert werden. Werden die rechten Schwenkachsen der Schwenktüren 10e und 10f aktiviert, dann kann eine 2x2-Öffnung 4 im linken Bereich der Trennwand 3 freigegeben werden. Alternativ oder zusätzlich zu der linken/rechten Schwenkachse kann auch eine obere und untere Schwenkachse individuell aktiviert werden.

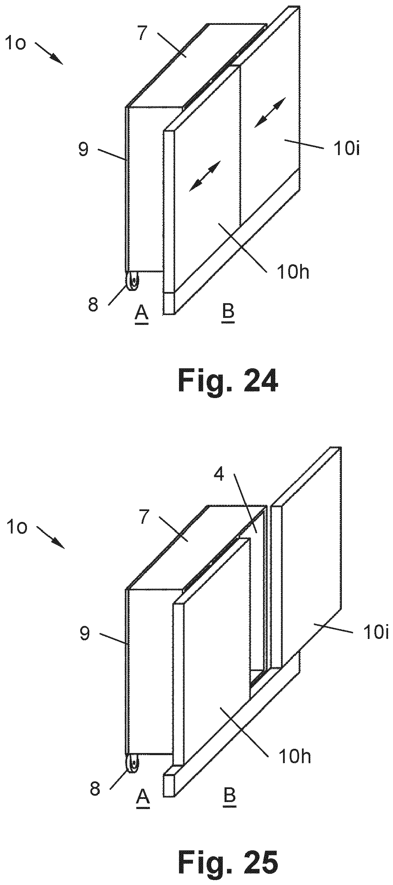

Fig. 24 zeigt nun ein Beispiel einer Abgabestation 1o, bei dem die Trennwand 3 mehrere als Schiebetüren 10h, 10i ausgebildete Verschlusselemente für die Öffnung 4 aufweist, welche paarweise gegenüberliegend angeordnet sind. Das Warenabgabesystem 5 ist dabei so ausgebildet, dass die Schiebetüren 10h, 10i bei einer Anforderung zur Übernahme der Waren 2 so positioniert werden, dass eine der besagten Anforderung zugeordnete Öffnung 4 freigegeben wird. Fig. 25 zeigt einen beispielhaften Fall, bei dem eine im rechten Bereich der Trennwand 3 angeordnete Öffnung 4 freigegeben wird und der Zugang zu einem dem Auftrag zugeordneten Regalfach 6 ermöglicht wird. Durch entsprechendes Positionieren der Schiebetüren 10h, 10i kann auch ein mittlerer Bereich oder ein linker Bereich der Trennwand 3 freigegeben werden. Generell kann die freigegebene Öffnung 4 praktisch stufenlos in ihrer Größe und ihrer Position variiert werden. Dabei sollte jedoch beachtet werden, dass die freigegebene Öffnung 4 in Position und Größe im Wesentlichen dem dahinter angeordneten Regalfach 6 entspricht. Der Antrieb der Schiebetüren 10h, 10i kann beispielsweise elektrisch, pneumatisch oder hydraulisch erfolgen.

In dem in den Figuren 24 und 25 dargestellten Beispiel ist ein Paar Schiebetüren 10h, 10i vorgesehen, deren Bewegungsrichtung (in der Fig. 24 mit Pfeilen dargestellt) horizontal ausgerichtet ist und die bezogen auf die genannte Bewegungsrichtung gegenüberliegend angeordnet sind (Fall i). Bei äquivalenter Funktionsweise wäre es aber auch denkbar, dass die Bewegungsrichtung der Schiebetüren 10h, 10i vertikal ausgerichtet ist.

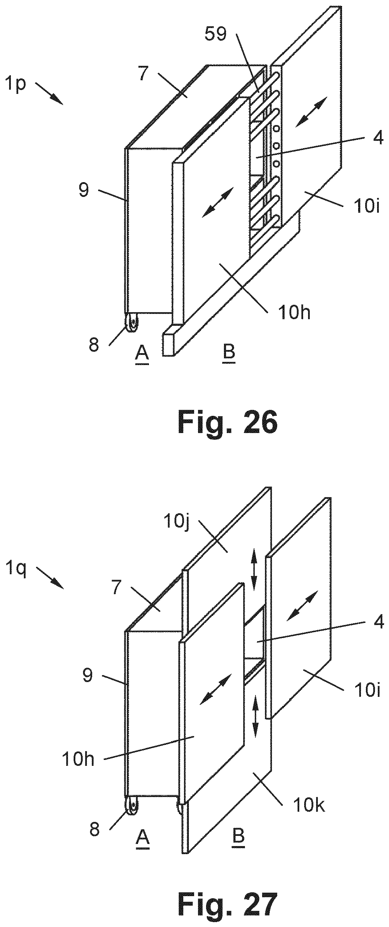

Fig. 26 zeigt ein weiteres Beispiel einer Abgabestation 1p, bei dem die Schiebetüre 10i individuell bewegbare Gitterstäbe 59 aufweist, die in eine Schließposition bewegbar sind, in der sie ein Regalfach 6 abdecken, und in eine Öffnungsposition bewegbar sind, in der sie ein Regalfach 6 freigeben. In dem in Fig. 26 dargestellten Zustand geben die Gitterstäbe 59 ein mittleres Regalfach 6 frei, versperren jedoch den Zugang zu einem oben liegenden Regalfach 6 und einem untenliegenden Regalfach 6. In dem gezeigten Beispiel stimmt die Bewegungsrichtung der Gitterstäbe 59 mit der Bewegungsrichtung der Schiebetüre 10i überein. Grundsätzlich könnte die Bewegungsrichtung der Gitterstäbe 59 aber auch anders ausgerichtet sein. Darüber hinaus wird angemerkt, dass auch die Schiebetür 10h individuell bewegbare Gitterstäbe 59 aufweisen könnte. Denkbar ist weiterhin, dass anstelle der Gitterstäbe 59 zu demselben Zweck individuell bewegbare Verschlussplatten vorgesehen sein könnten. Die Gitterstäbe 59 und/oder Verschlussplatten müssen nicht zwangsläufig einzeln bewegt werden, sondern können auch in Gruppen bewegt werden. Der Antrieb der Gitterstäbe 59 / Verschlussplatten kann beispielsweise elektrisch, pneumatisch oder hydraulisch erfolgen. Durch die Gitterstäbe 59 / Verschlussplatten kann die freigegebene Öffnung 4 ebenfalls in ihrer Größe variiert werden, wobei wieder darauf geachtet werden sollte, dass die freigegebene Öffnung 4 in Position und Größe im Wesentlichen dem dahinter angeordneten Regalfach 6 entspricht.

Fig. 27 zeigt ein weiteres Beispiel einer Abgabestation 1q, bei dem ein erstes Paar Schiebetüren 10h, 10i vorgesehen ist, deren Bewegungsrichtung horizontal ausgerichtet ist und die bezogen auf diese horizontale Bewegungsrichtung gegenüberliegend angeordnet sind (siehe die horizontalen Pfeile in der Fig. 27). Weiterhin ist ein zweites Paar Schiebetüren 10j, 10k vorgesehen, deren Bewegungsrichtung vertikal ausgerichtet ist und die bezogen auf diese vertikale Bewegungsrichtung gegenüberliegend angeordnet sind (siehe die vertikalen Pfeile in der Fig. 27). Das erste Paar 10h, 10i und das zweite Paar 10j, 10k sind quer zu der genannten horizontalen und der genannten vertikalen Bewegungsrichtung hintereinander liegend angeordnet (Fall ii). Dadurch kann die vom ersten Paar 10h, 10i freigegebene Öffnung zumindest teilweise durch das zweite Paar 10j, 10k abgedeckt werden und umgekehrt. In dem in Fig. 27 gezeigten Beispiel wird eine relativ kleine Öffnung 4 im mittleren Bereich der Trennwand 3 freigegeben. Durch entsprechendes Ansteuern der Schiebetüren 10h.. 10k kann die freigegebene Öffnung 4 jedoch praktisch stufenlos und zweidimensional in ihrer Größe und ihrer Position variiert werden. Dabei sollte jedoch wiederum bedacht werden, dass die freigegebene Öffnung 4 in Position und Größe im Wesentlichen dem dahinter angeordneten Regalfach 6 entspricht. Der Antrieb der Schiebetüren 10h.. 10k kann wiederum beispielsweise elektrisch, pneumatisch oder hydraulisch erfolgen.

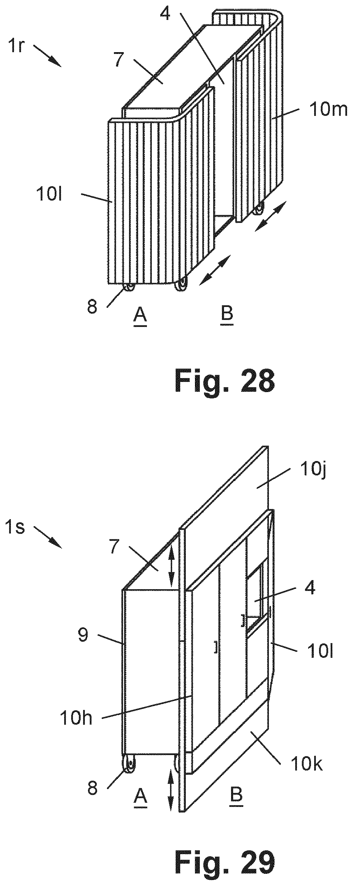

Fig. 28 zeigt ein Beispiel einer Abgabestation 1r, welche der in den Figuren 24 und 25 dargestellten Abgabestation 1o sehr ähnlich ist. Anstelle der Schiebetüren 10h, 10i sind aber Rolltüren10l, 10m vorgesehen. Auch bei dieser Ausführungsform kann die freigegebene Öffnung 4 praktisch stufenlos in ihrer Größe und ihrer Position variiert werden. Der Antrieb kann wiederum elektrisch, pneumatisch oder hydraulisch erfolgen. Das zu den Figuren 24 bis 27 Gesagte gilt sinngemäß auch für die in der Fig. 28 dargestellte Ausführungsform, wobei eine Rolltür 101, 10m an die Stelle einer Schiebetür 10h..10k tritt. Vorteilhaft benötigt eine Rolltür 101, 10m weniger Bauraum als eine Schiebetür 10h..10k. Die Trennwand 3 kann daher kompakter aufgebaut werden.

In der Fig. 29 ist schließlich ein Beispiel einer Abgabestation 1s dargestellt, bei dem ein Paar Schiebetüren 10j, 10k vorgesehen ist, deren Bewegungsrichtung vertikal ausgerichtet ist und die bezogen auf diese vertikale Bewegungsrichtung gegenüberliegend angeordnet sind. Zudem weist die Trennwand 3 mehrere Schwenktüren 101 auf, wobei die Schiebetüren 10j, 10k und die Schwenktüren 101 quer zu der genannten vertikalen Bewegungsrichtung hintereinander liegend angeordnet sind (Fall iii). Dadurch kann die von der Schwenktür 101 freigegebene Öffnung 4 zumindest teilweise durch die Schiebetüren 10j, 10k abgedeckt werden. Das zu Fig. 27 Gesagte gilt sinngemäß auch für die in der Fig. 29 dargestellte Ausführungsform. An die Stelle der Schiebetür 10j, 10k können auch bei dieser Ausführungsform wieder Rolltüren 101, 10m treten. Die Bewegungsrichtung der Schiebetüren 10j, 10k / Rolltüren 101, 10m könnte auch horizontal ausgerichtet sein.

Im Hinblick auf die in den Figuren 21 bis 29 dargestellten Ausführungsvarianten und deren Abwandlungen wird angemerkt, dass die Regale 7 nicht notwendigerweise als mobile, in Bezug auf die Trennwand 3 bewegliche, Regale 7 ausgebildet sein müssen, sondern die Regale 7 in Bezug auf die Trennwand 3 auch fix (ortsfest) angeordnet sein können. Besonders vorteilhaft sind die in den Figuren 21 bis 29 dargestellten Ausführungsvarianten im Zusammenhang mit frei konfigurierbaren Regalen 7 (siehe hierzu insbesondere die Figuren 18-20). Weiterhin wird angemerkt, dass die Schiebetüren 10h..10k / Rolltüren 101, 10m zwar in den Beispielen jeweils gleich groß sind, diese aber auch unterschiedlich groß sein können.

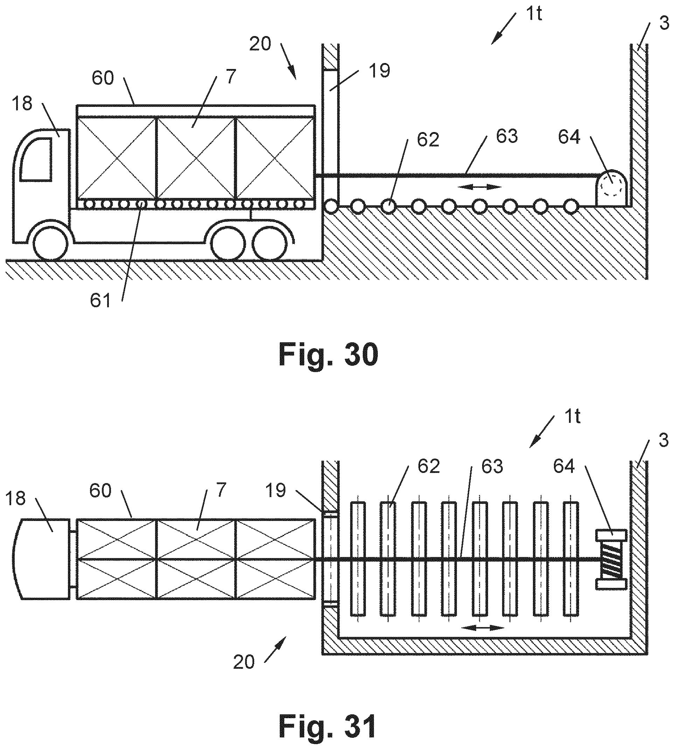

Die Figuren 30 und 31 zeigen nun ein erstes Beispiel für einen Lastkraftwagen 18 mit einem Laderaum 60 und mehreren im Laderaum 60 aufgenommenen mobilen Regalen 7, wobei der Lastkraftwagen 18 auf einem Abstellplatz an einer Laderampe 20 vor einem Tor 19 der Abgabestation 1t abgestellt ist. Die Fig. 30 zeigt die Anordnung in Seitenansicht, die Fig. 31 in Draufsicht. Der Laderaum 60 weist Fördermittel 61 auf, welche in dem vorliegenden Beispiel konkret als Förderrollen ausgebildet sind. Für das Beispiel wird angenommen, dass diese Förderrollen 61 freilaufend sind. Am Boden der Abgabestation 1t sind ebenfalls freilaufende Förderrollen 62 angeordnet. Mit Hilfe eines Seils 63 einer Seilwinde 64 können die Regale 7 aus dem Lastkraftwagen 18 entladen werden. Besonders vorteilhaft ist es dabei, wenn die Regale 7 mit Hilfe von Kupplungen aneinander gekuppelt werden (vergleiche Fig. 10), da dann alle Regale 7 auf einmal entladen werden können. Nach dem Entladen können die Regale 7 von Flurförderfahrzeugen 17a..17d übernommen werden, und es können die bereits beschriebenen Abläufe zur Abgabe der Waren 2 ausgeführt werden.

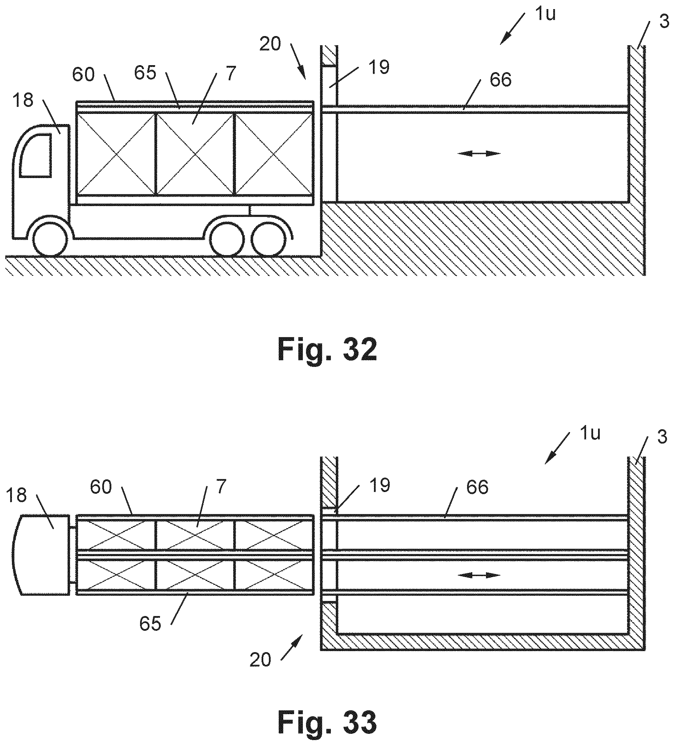

Die Figuren 32 und 33 zeigen eine weitere Anordnung, welche der in den Figuren 30 und 31 dargestellten Anordnung sehr ähnlich ist. Im Unterschied dazu sind aber im Laderaum 60 des Lastkraftwagens 18 Hängeschienen / Tragschienen 65 anstelle der am Boden des Laderaums 60 angeordneten Förderrollen 61 vorgesehen. In äquivalenter Weise sind in der Abgabestation 1u Hängeschienen / Tragschienen 66 anstelle der am Boden angeordneten Förderrollen 62 vorgesehen. Die Regale 7 werden nun hängend an den Hängeschienen / Tragschienen 65, 66 gelagert und bewegt. Vorteilhaft bleibt der Boden des Laderaums 60 beziehungsweise der Abgabestation 1u frei von Fördermitteln 61, 62, wodurch dieser leicht von Flurförderfahrzeugen 17a..17d, 31, 33a und 33b sowie von autonomen, fahrbaren Fahrzeugen 38 befahren werden kann. Zum leichteren Bewegen der Regale 7 können in den Hängeschienen / Tragschienen 65, 66 Förderrollen vorgesehen sein (nicht dargestellt). Zum Entladen kann wiederum eine Seilwinde 64 vorgesehen sein, so wie diese in dem in den Figuren 30 und 31 dargestellten Beispiel eingesetzt wird. Auch hier können die Regale 7 nach dem Entladen von Flurförderfahrzeugen 17a..17d übernommen werden, und es können die bereits beschriebenen Abläufe zur Abgabe der Waren 2 ausgeführt werden.

Generell können die Förderrollen 61, 62 gemäß den Figuren 30, 31, 34-36 (sowie in den Hängeschienen / Tragschienen 65, 66 vorgesehene Förderrollen) zumindest teilweise angetrieben sein. Eine Seilwinde 64 zum Entladen kann dann entfallen. Denkbar ist auch, dass anstelle der Förderrollen 61, 62 oder zusätzlich dazu freilaufende und/oder angetriebene Förderbänder und/oder freilaufende und/oder angetriebene Förderketten im Laderaum 60 und/oder in der Abgabestation 1t, 1u vorgesehen sind. Anstelle der Seilwinde 64 kann auch eine Winsch vorgesehen sein.

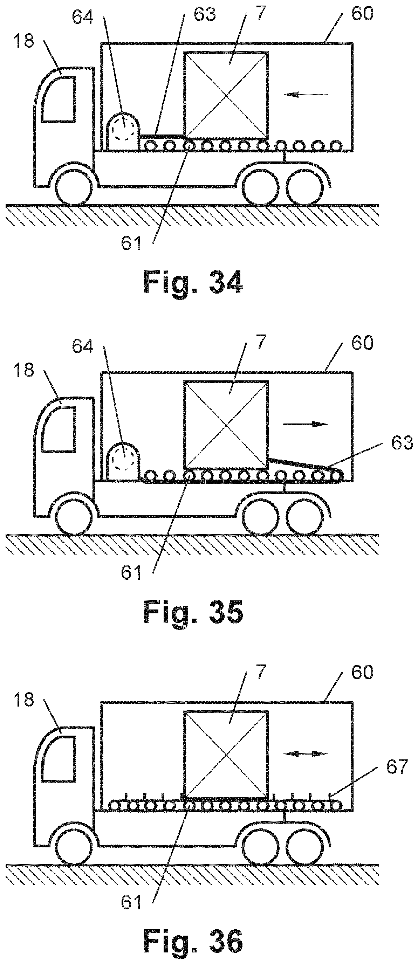

Fig. 34 zeigt nun einen beispielhaften Lastkraftwagen 18, bei dem eine Seilwinde 64 zum Laden der Regale 7 in den Laderaum 60 vorgesehen ist. Denkbar ist aber auch, dass das Seil 63 an der der Seilwinde 64 gegenüberliegenden Seite des Laderaums 60 umgelenkt wird und die Seilwinde 64 daher auch zum Entladen des Laderaums 60 eingesetzt werden kann, so wie dies in der Fig. 35 dargestellt ist. Denkbar ist auch eine Kombination der in den Figuren 34 und 35 dargestellten Ausführungsformen, wodurch die Seilwinde 64 zum Be- und Entladen des Lastkraftwagens 18 eingesetzt werden kann. Insbesondere ist dann der Einsatz einer Winsch und eines endlosen Seils von Vorteil (vergleiche Fig. 36). Ähnliche Überlegungen wie für den Lastkraftwagen 18 gelten auch für die Abgabestation 1t, 1u, deren Seilwinde 64 ebenfalls zum Be- und Entladen des Lastkraftwagens 18 eingesetzt werden kann. Auch der Einsatz einer Winsch mit endlosem Seil 63 ist hier gleichermaßen vorstellbar.

Fig. 36 zeigt schließlich eine Ausführungsform eines Lastkraftwagens 18, bei dem ein umlaufendes Band oder eine umlaufende Kette mehrere Mitnehmer 67 aufweist, mit deren Hilfe ein Regal 7 in den Laderaum 60 hinein oder aus dem Laderaum 60 hinaus befördert werden kann. Dieses Band oder diese Kette trägt nicht zwangsläufig das Gewicht der Regale 7, sondern kann rein zur Übertragung einer zur Bewegung der Regale 7 nötigen Kraft vorgesehen sein. Dieses Band / diese Kette eignet sich daher auch zum Be- und Entladen von Regalen 7 mit Rollen 8. Lasttragende Förderrollen 61, 62, Förderbänder und Förderketten im Laderaum 60 und in der Abgabestation 1t können dann entfallen. Das umlaufende Band oder die umlaufende Kette mit den Mitnehmern 67 kann natürlich auch im Bereich der Hängeschienen / Tragschienen 65 des Lastkraftwagens 18 angeordnet sein, oder auch am Boden der Abgabestation 1t beziehungsweise im Bereich der Hängeschienen / Tragschienen 66 der Abgabestation 1u.

Generell wird anmerkt, dass der Laderaum 60 in allen Ausführungsbeispielen in einem vom Lastkraftwagen 18 abnehmbaren Container angeordnet sein kann. In diesem Fall muss der Lastkraftwagen 18 nicht für die gesamte Dauer des Be- oder Entladevorgangs an der Laderampe 20 abgestellt sein. Stattdessen kann der den Laderaum 60 aufweisende Container an der Laderampe 20 abgestellt werden und nach dem Be- oder Entladevorgang wieder auf den Lastkraftwagen 18 geladen werden.

Abschließend wird angemerkt, dass die ersten Warenlagerbereiche A, A1, A2 und/oder die zweiten Warenlagerbereiche G1..G5 klimatisiert sein können. Dies ist insbesondere dann von Vorteil, wenn in den mobilen Regalen 7, 7a..7m Lebensmittel und/oder andere verderbliche Güter gelagert werden.

Die Ausführungsbeispiele zeigen mögliche Ausführungsvarianten erfindungsgemäßer Abgabestationen 1a..1u und mobile Regale 7, 7a..7m, wobei an dieser Stelle bemerkt sei, dass die Erfindung nicht auf die speziell dargestellten Ausführungsvarianten derselben eingeschränkt ist, sondern auch andere Ausführungsvarianten möglich sind, deren Herleitung im Können des auf diesem technischen Gebiet tätigen Fachmannes liegt.

Der Schutzbereich ist durch die Ansprüche bestimmt.

Insbesondere wird auch festgehalten, dass die dargestellten Anordnungen in der Realität auch mehr oder weniger Bestandteile als dargestellt umfassen können und in den Figuren bisweilen stark vereinfacht dargestellt sind.

Der Ordnung halber sei abschließend darauf hingewiesen, dass die dargestellten Vorrichtungen sowie ihre Bestandteile zum besseren Verständnis ihres Aufbaus darüber hinaus teilweise unmaßstäblich und/oder vergrößert und/oder verkleinert dargestellt wurden.

### Bezugszeichenaufstellung

| | | | |
|---|---|---|---|
| 1a..1u | Abgabestationen | 37 | Rolltor |
| 2, 2a, 2b | Ware | 38 | autonomes, fahrbares Fahr- |
| 3, 3a, 3b | Trennwand | | zeug |
| 4, 4a, 4b | verschließbare Öffnung | 39 | Rolltor |
| 5, 5a, 5b | Warenabgabesystem | 40 | Ausstoßer |
| 6 | Regalfach | 41 | Regalhalter |
| 7, 7a..7m | mobiles Regal | 42 | Verladeroboter (Mehrachs- |
| 8, 8a, 8b | Rolle | | roboter) |
| 9 | Regalfach-Abschlusswand | 43 | Landeplattform |
| 10, 10a..10d | Tür | 44 | Flugdrohne |
| | | 45 | Fahrsteuerung |
| 11 | Warenverteilsystem | | |
| 12 | Warenlager (Hochregal) | 46 | Lenkmotor |
| 13 | Schiene | 47a, 47b | Ultraschallsensor |
| 14 | Regalbediengerät | 48 | Laserscanner |
| 15 | Förderbahn | 49 | Triangulationsempfänger |
| | | 50 | Akkumulator |
| 16a, 16b | Arbeiter | | |
| 17a..17d | Flurförderfahrzeug | 51a..51d | Regalmodul |
| 18 | Lastkraftwagen | 52 | Hängestange |
| 19 | erstes Tor | 53 | Kamera |
| 20 | erste Laderampe | 54 | Grundkörper |
| | | 55a, 55b | Nut |
| 21 | Zugangstür | | |
| 22 | Sortierroboter (Mehrebe-nen-Regalbediengerät) | 56 | Regal-Trennwand |
| | | 57 | elektronischer Speicher / |
| 23 | Schiene | | elektronische Schaltung |
| 24 | fixes Regal | 58 | Schalter |
| 25 | zweites Tor | 59 60 | Gitterstab Laderaum |
| 26 | zweite Laderampe | | |
| 27 | Übergabeöffnung | 61 | Förderrolle |
| 28 | Regalfach-Trennwand | 62 | Förderrolle |
| 29 | bodenseitige Schiene | 63 | Seil |
| 30 | Führungsschiene | 64 | Seilwinde |
| | | 65 | Hänge- /Tragschienen |
| 31 | Flurförderfahrzeug | | |
| 32 | Kupplung | 66 | Hänge- /Tragschienen |
| 33a, 33b | Flurförderfahrzeug | 67 | Mitnehmer |
| 34 | Hubwerk/Hubgabel | | |
| 35 | Regalsteher/Regalfuß | | |
| 36 | Hubeinrichtung | | |
| A, A1, A2 | erster Warenlagerbereich | | |
| B, B1, B2 | Kundenzugangsbereich | | |
| C | Hochregal-Lagerbereich | | |
| D | erster Förderbereich | | |
| E | Kommissionierbereich | | |
| F | zweiter Förderbereich | | |
| G1..G5 | zweiter Warenlagerbereich | | |
| QQ | Vorderansicht | | |

## Patentansprüche

1. Verfahren zur Verteilung von Waren (2, 2a, 2b), umfassend die Schritte:
- Kommissionieren von zu einem Auftrag gehörenden Waren (2, 2a, 2b) in zumindest ein Regalfach (6) eines Regals (7, 7a..7m),
- wobei das Regal (7, 7a..7m) in eine Übergabeposition in einem ersten Warenlagerbereich (A, A1, A2) einer Abgabestation (1a..1u) transportiert wird oder dort angeordnet ist, wobei die Abgabestation (1a..1u) den durch eine erste Trennwand (3, 3a 3b) getrennten ersten Warenlagerbereich (A, A1, A2) und einen Kundenzugangsbereich (B, B1, B2) aufweist und wobei das zumindest eine Regalfach (6) in der Übergabeposition des Regals (7, 7a..7m) durch eine verschließbare Öffnung (4, 4a, 4b) in der ersten Trennwand (3, 3a, 3b) zugänglich ist, und
- wobei ein Warenabgabesystem (5) eine Anforderung zur Übernahme der Waren (2, 2a, 2b) durch eine Person oder einer der Person zugeordneten Maschine (38, 44) entgegennimmt und die verschließbare Öffnung (4, 4a, 4b) freigibt, wenn die besagte Person oder die besagte Maschine (38, 44) für die Übernahme der Waren (2, 2a, 2b) berechtigt ist, **dadurch gekennzeichnet, dass**
- das Warenabgabesystem (5) eine zusammenhängende Öffnung (4, 4a, 4b) variabler Größe durch Freigabe mehrerer benachbarter, in der Trennwand (3, 3a, 3b) angeordneter, zumindest teilweise paarweise gegenüberliegend angeschlagener und dieser Anforderung zugeordneter Schwenktüren (10a.. 10g) zum Verschließen der Öffnung (4, 4a, 4b) individuell und abhängig von der Anforderung zur Übernahme der Waren (2, 2a, 2b) freigibt.

2. . Verfahren nach Anspruch 1, **dadurch gekennzeichnet, dass** das Warenabgabesystem (5) bei einer Anforderung zur Übernahme der Waren (2, 2a, 2b) eine dieser Anforderung zugeordnete Schwenkachse mehrerer Schwenkachsen einer Schwenktür (10a..10g) aktiviert und die übrigen Schwenkachsen dieser Schwenktür (10a..10g) deaktiviert.

3. Verfahren nach Anspruch 1, **dadurch gekennzeichnet, dass** das Warenabgabesystem (5) bei einer Anforderung zur Übernahme der Waren (2, 2a, 2b) mehrere Schiebetüren (10i..10k) oder Rolltüren (10l..10m) der Trennwand (3, 3a, 3b) paarweise so positioniert, dass eine der besagten Anforderung zugeordnete Öffnung (4, 4a, 4b) freigegeben wird.

4. Verfahren nach Anspruch 3, **dadurch gekennzeichnet, dass** das Warenabgabesystem (5) bei einer Anforderung zur Übernahme der Waren (2, 2a, 2b) Gitterstäbe (58) oder Verschlussplatten der Schiebetüren (10i..10k) oder Rolltüren (101..10m) so positioniert, dass eine der besagten Anforderung zugeordnete Öffnung (4, 4a, 4b) freigegeben wird.

5. Abgabestation (1a..1u) zur Verteilung von Waren (2, 2a, 2b), umfassend
- einen ersten Warenlagerbereich (A, A1, A2),
- einen Kundenzugangsbereich (B, B1, B2),
- eine erste Trennwand (3, 3a, 3b), welche den ersten Warenlagerbereich (A, A1, A2) und den Kundenzugangsbereich (B, B1, B2) voneinander trennt und zumindest eine verschließbare Öffnung (4, 4a, 4b) aufweist,
- ein Regal (7, 7a..7m) mit mehreren Regalfächern (6), die durch die zumindest eine verschließbare Öffnung (4, 4a, 4b) in der ersten Trennwand (3a) zugänglich sind, und
- ein Warenabgabesystem (5), welches dazu ausgebildet ist, eine Anforderung zur Übernahme der Waren (2, 2a, 2b) durch eine Person oder einer der Person zugeordneten Maschine (38, 44) entgegenzunehmen und die zumindest eine verschließbare Öffnung (4, 4a, 4b) freizugeben, wenn die besagte Person oder die besagte Maschine (38, 44) für die Übernahme der Waren (2, 2a, 2b) berechtigt ist,
**dadurch gekennzeichnet, dass**
- die erste Trennwand (3, 3a, 3b) mehrere Schwenktüren (10a..10g) zum Verschließen der zumindest einen Öffnung (4, 4a, 4b) aufweist und zumindest ein Teil der Schwenktüren (10a.. 10g) paarweise gegenüberliegend angeschlagen ist, und
- das Warenabgabesystem (5) dazu ausgebildet ist, eine zusammenhängende Öffnung (4, 4a, 4b) variabler Größe durch Freigabe mehrerer benachbarter und der Anforderung zugeordneter Schwenktüren (10a.. 10g) individuell und abhängig von der Anforderung zur Übernahme der Waren (2, 2a, 2b) freizugeben.

6. Abgabestation (1a..1u) nach Anspruch 5, **dadurch gekennzeichnet, dass** der zusammenhängenden Öffnung (4, 4a, 4b) ein zusammenhängendes Regalfach (6) zugeordnet ist.

7. Abgabestation (1a..1u) nach Anspruch 5, **dadurch gekennzeichnet, dass** die Schwenkachsen der Schwenktüren (10a.. 10g) vertikal, horizontal oder gemischt vertikal und horizontal ausgerichtet sind.

8. Abgabestation (1a..1u) nach Anspruch 5, **dadurch gekennzeichnet, dass** die Trennwand (3, 3a, 3b) mehrere Schiebetüren (10i.. 10k) oder Rolltüren (10l..10m) zum Verschließen der zumindest eine Öffnung (4, 4a, 4b) aufweist, welche paarweise gegenüberliegend angeordnet sind, und das Warenabgabesystem (5) dazu ausgebildet ist, die Schiebetüren (10i..10k) / Rolltüren (10l..10m) bei einer Anforderung zur Übernahme der Waren (2, 2a, 2b) so zu positionieren, dass zumindest eine der besagten Anforderung zugeordnete Öffnung (4, 4a, 4b) freigegeben wird.

9. Abgabestation (1a..1s) nach Anspruch 8, **dadurch gekennzeichnet, dass**
i) ein Paar Schiebetüren (10i..10k) / Rolltüren (10l..10m) vorgesehen ist, deren Bewegungsrichtung horizontal oder vertikal ausgerichtet ist und die bezogen auf die genannte Bewegungsrichtung gegenüberliegend angeordnet sind, oder
ii) ein erstes Paar Schiebetüren (10i..10k) / Rolltüren (10l..10m) vorgesehen ist, deren Bewegungsrichtung horizontal ausgerichtet ist und die bezogen auf diese horizontale Bewegungsrichtung gegenüberliegend angeordnet sind, und dass ein zweites Paar Schiebetüren (10i.. 10k) / Rolltüren (101.. 10m) vorgesehen ist, deren Bewegungsrichtung vertikal ausgerichtet ist und die bezogen auf diese vertikale Bewegungsrichtung gegenüberliegend angeordnet sind, wobei das erste Paar und das zweite Paar quer zu der genannten horizontalen und der genannten vertikalen Bewegungsrichtung hintereinander liegend angeordnet sind, oder
iii) ein Paar Schiebetüren (10i..10k) / Rolltüren (10l..10m) vorgesehen ist, deren Bewegungsrichtung horizontal oder vertikal ausgerichtet ist und die bezogen auf diese horizontale oder vertikale Bewegungsrichtung gegenüberliegend angeordnet sind, und mehrere Schwenktüren (10a..10g) vorgesehen sind, wobei die Schiebetüren (10i..10k) / Rolltüren (101.. 10m) und die Schwenktüren (10a..10g) quer zu der genannten horizontalen oder vertikalen Bewegungsrichtung hintereinander liegend angeordnet sind.

10. Abgabestation (1a..1u) nach Anspruch 8 oder 9, **dadurch gekennzeichnet, dass** zumindest eine Schiebetüre (10i..10k) / Rolltüre (10l..10m) individuell bewegbare Gitterstäbe (58) oder Verschlussplatten aufweist, die in eine Schließposition bewegbar sind, in der sie ein Regalfach (6) abdecken, und in eine Öffnungsposition bewegbar sind, in der sie ein Regalfach (6) freigeben.

11. Abgabestation (1a..1u) nach einem der Anspruch 5 bis 10, **dadurch gekennzeichnet, dass** das Regal (7, 7a..7m) in Bezug auf die Trennwand (3, 3a, 3b) fix angeordnet ist.

12. Abgabestation (1a..1u) nach einem der Anspruch 5 bis 10, **dadurch gekennzeichnet, dass** das Regal (7, 7a..7m) als in Bezug auf die Trennwand (3, 3a, 3b) bewegliches, mobiles Regal (7, 7a..7m) ausgebildet ist und in eine Übergabeposition bewegbar ist, in der zumindest ein Regalfach (6) des mobilen Regals (7, 7a..7m) durch die zumindest eine verschließbare Öffnung (4, 4a, 4b) in der ersten Trennwand (3a) zugänglich ist.

13. Abgabestation nach Anspruch 12, **dadurch gekennzeichnet, dass** das Regal (7, 7a..7m) beladen ist und das beladene Regal (7, 7a..7m) mit Hilfe eines Flurförderfahrzeugs (17a..17d, 31, 33a, 33b) in die Übergabeposition transportiert wird.

14. Abgabestation nach Anspruch 13, **dadurch gekennzeichnet, dass** das beladene Regal (7, 7a..7m) mit Hilfe des Flurförderfahrzeugs (17a..17d, 31, 33a, 33b) in einen zweiten Warenlagerbereich (G1..G5) transportiert wird, der abseits der genannten, ersten Trennwand (3, 3a, 3b) liegt, und von dort in die Übergabeposition gebracht wird, wenn das Warenabgabesystem (5) eine entsprechende Anforderung zur Übernahme der im Regal (7, 7a..7m) befindlichen Waren (2, 2a, 2b) entgegennimmt.

15. Abgabestation (1a..1u) nach Anspruch 12, **dadurch gekennzeichnet, dass** das mobile Regal (7, 7a..7m)
- individuell konfigurierbare Regal-Trennwände (56) und/oder Rückwände und/oder Fachböden und/oder Hängestangen (52) aufweist, oder
- mehrere untereinander verbindbare Module (51a..51d) mit Regalfächern (6) unterschiedlicher Größe aufweist.

## Claims

1. A method for distributing articles (2, 2a, 2b) comprising the steps of:
- order-picking the articles (2, 2a, 2b) included in an order into at least one shelf compartment (6) of a shelf unit (7, 7a..7m),
- wherein the shelf unit (7, 7a..7m) is transported into or arranged in a handover position in a first article storage region (A, A1, A2) of a dispensing station (1a..1u), wherein the dispensing station (1a..1u) comprises the first article storage region (A, A1, A2) separated by a first separating wall (3, 3a, 3b) and a customer access region (B, B 1, B2), and wherein the at least one shelf compartment (6), in the handover position of the shelf unit (7, 7a..7m), is accessible via a closeable opening (4, 4a, 4b) in the first separating wall (3, 3a, 3b), and
- wherein an article distribution system (5) accepts a request to pick up the articles (2, 2a, 2b) by a person or a machine (38, 44) associated with the person and releases the closable opening (4, 4a, 4b) if the person or the machine (38, 44) is authorized to pick up the articles (2, 2a, 2b),
**characterized in that**
- the article dispensing system (5) releases, individually and depending on the request to pick up the articles (2, 2a, 2b), a continuous opening (4, 4a, 4b) of variable size by releasing several adjacent swing doors (10a..10g) for closing the opening (4, 4a, 4b), which are disposed in the separating wall (3, 3a, 3b) and at least some of which are hinged in opposite pairs and which are associated with this request.

2. The method according to claim 1, **characterized in that** the article dispensing system (5) activates, at a request to pick up the articles (2, 2a, 2b), a swivel axis associated with this request of several swivel axes of a swing door (10a.. 10g) and deactivates the remaining swivel axes of this swing door (10a.. 10g).

3. The method according to claim 1, **characterized in that** the article dispensing system (5) positions, at a request to pick up the articles (2, 2a, 2b), several sliding doors (10i..10k) or roll-up doors (10l..10m) of the separating wall (3, 3a, 3b) in pairs in such a way that an opening (4, 4a, 4b) associated with said request is released.

4. The method according to claim 3, **characterized in that** the article dispensing system (5) positions, at a request to pick up the articles (2, 2a, 2b), grate bars (58) or closing plates of the sliding doors (10i.. 10k) or roll-up doors (101.. 10m) in such a way that an opening (4, 4a, 4b) associated with said request is released.

5. A dispensing station (1a..1u) for distributing articles (2, 2a, 2b), comprising
- a first article storage region (A, A1, A2),
- a customer access region (B, B1, B2),
- a first separating wall (3, 3a, 3b) separating the first article storage region (A, A1, A2) and the customer access region (B, B1, B2) from each other and comprising at least one closeable opening (4, 4a, 4b),
- a shelf unit (7, 7a..7m) with several shelf compartments (6) accessible via the at least one closeable opening (4, 4a, 4b) in the first separating wall (3a), and
- an article dispensing system (5) configured to accept a request to pick up the articles (2, 2a, 2b) by a person or a machine (38, 44) associated with the person and to release the at least one closeable opening (4, 4a, 4b) if said person or said machine (38, 44) is authorized to pick up the articles (2, 2a, 2b),
**characterized in that**
- the first separating wall (3, 3a, 3b) comprises several swing doors (10a..10g) for closing the at least one opening (4, 4a, 4b) and at least some of the swing doors (10a.. 10g) are hinged in opposite pairs, and
- the article dispensing system (5) is configured to release, individually and depending on the request to pick up the articles (2, 2a, 2b), a continuous opening (4, 4a, 4b) of variable size by releasing several adjacent swing doors (10a..10g) associated with this request.

6. The dispensing station (1a..1u) according to claim 5, **characterized in that** the continuous opening (4, 4a, 4b) is associated with a continuous shelf compartment (6).

7. The dispensing station (1a..1u) according to claim 5, **characterized in that** the swivel axes of the swing doors (10a.. 10g) are aligned vertically, horizontally or mixed vertically and horizontally.

8. The dispensing station (1a..1u) according to claim 5, **characterized in that** the separating wall (3, 3a, 3b) comprises several sliding doors (10i..10k) or roll-up doors (10l..10m) for closing the at least one opening (4, 4a, 4b) arranged in opposite pairs, and the article dispensing system (5) is configured to position, at a request to pick up the articles (2, 2a, 2b), the sliding doors (10i..10k) / roll-up doors (10l..10m) in such a way that at least one opening (4, 4a, 4b) associated with said request is released.

9. The dispensing station (1a..1s) according to claim 8, **characterized in that**
i) a pair of sliding doors (10i..10k) / roll-up doors (10l..10m) is provided whose direction of movement is aligned horizontally or vertically and which are arranged opposite each other in relation to said direction of movement, or
ii) a first pair of sliding doors (10i..10k) / roll-up doors (10l..10m) is provided whose direction of movement is horizontally aligned and which are arranged opposite each other in relation to this horizontal direction of movement, and a second pair of sliding doors (10i.. 10k) / roll-up doors (10l..10m) is provided whose direction of movement is vertically aligned and which are arranged opposite each other in relation to this vertical direction of movement, wherein the first pair and the second pair are arranged transversely to said horizontal and said vertical direction of movement behind each other, or
iii) a pair of sliding doors (10i..10k) / roll-up doors (10l..10m) is provided whose direction of movement is aligned horizontally or vertically and which are arranged opposite each other in relation to this horizontal or vertical direction, and several swing doors (10a..10g) are provided, wherein the sliding doors (10i..10k) / roll-up doors (101..10m) and the swing doors (10a.. 10g) are arranged transversely to said horizontal or vertical direction of movement behind one another.

10. The dispensing station (1a..1u) according to claim 8 or 9, **characterized in that** at least one sliding door (10i..10k) / roll-up door (10l..10m) comprises individually movable grate bars (58) or closing plates movable into a closed position, in which they cover a shelf compartment (6) and movable into an open position, in which they release a shelf compartment (6).

11. The dispensing station (1a..1u) according to one of claims 5 to 10, **characterized in that** the shelf unit (7, 7a..7m) is arranged in a fixed manner in relation to the separating wall (3, 3a, 3b).

12. The dispensing station (1a..1u) according to one of claims 5 to 10, **characterized in that** the shelf unit (7, 7a..7m) is configured as a mobile shelf unit (7, 7a..7m) movable in relation to the separating wall (3, 3a, 3b) and movable into a handover position, in which at least one shelf compartment (6) of the mobile shelf unit (7, 7a..7m) is accessible via the closeable opening (4, 4a, 4b) in the first separating wall (3a).

13. The dispensing station according to claim 12, **characterized in that** the shelf unit (7, 7a..7m) is loaded and the loaded shelf unit (7, 7a..7m) is transported into the handover position with the help of an industrial truck (17a..17d, 31, 33a, 33b).

14. The dispensing station according to claim 13, **characterized in that** the loaded shelf unit (7, 7a..7m) is transported, with the help of the industrial truck (17a..17d, 31, 33a, 33b), into a second article storage region (G1..G5) located away from said first separating wall (3, 3a, 3b) and is brought into the handover position from there when the article dispensing system (5) receives a relevant request for picking up the articles (2, 2a, 2b) located inside the shelf unit (7, 7a..7m).

15. The dispensing station (1a..1u) according to claim 12, **characterized in that** the mobile shelf unit (7, 7a..7m)
- comprises individually configurable shelf unit separating walls (56) and/or rear walls and/or compartment shelves and/or hanger rods (52), or
- comprises several interconnectable modules (51a..51d) with shelf compartments (6) of different sizes.

## Revendications

1. Procédé de répartition d'articles (2, 2a, 2b) comprenant les étapes suivantes :
- préparation d'articles (2, 2a, 2b) faisant partie d'une commande dans au moins un compartiment de rayonnage (6) d'un rayonnage (7, 7a... 7m),
- dans lequel le rayonnage (7, 7a... 7m) est transporté vers une position de transfert dans une première zone de stockage d'articles (A, A1, A2) d'une station de distribution (1a... 1u) ou y est disposé, dans lequel la station de distribution (1a...1u) comprend la première zone de stockage d'articles (A, A1, A2) et une zone d'accès client (B, B 1, B2), séparées par une première cloison (3, 3a, 3b) et dans lequel l'au moins un compartiment de rayonnage (6) est accessible, dans la position de transfert du rayonnage (7, 7a ... 7m), par une ouverture refermable (4, 4a, 4b) dans la première cloison (3, 3a, 3b) et
- dans lequel le système de distribution d'articles (5) prend en compte une demande de prise en charge des articles (2, 2a, 2b) par une personne ou une machine (38, 44) correspondant à la personne et libère l'ouverture refermable (4, 4a, 4b) lorsque la personne mentionnée ou la machine (38, 44) mentionnée est autorisée à prendre en charge les articles (2, 2a, 2b), **caractérisé en ce que**
- le système de distribution d'articles (5) libère une ouverture continue (4, 4a, 4b) de taille variable par la libération de plusieurs portes pivotantes (10a... 10g) adjacentes, disposées dans la cloison (3, 3a, 3b) et accrochées au moins partiellement par paires les unes en face des autres et correspondant à cette demande, pour la fermeture de l'ouverture (4, 4a, 4b), de manière individuelle et en fonction de la demande de prise en charge des articles (2, 2a, 2b).

2. Procédé selon la revendication 1, **caractérisé en ce que** le système de distribution d'articles (5) active, lors d'une demande de prise en charge des articles (2, 2a, 2b), un axe de pivotement, correspondant à cette demande, de plusieurs axes de pivotement d'une porte pivotante (10a... 10g) et désactive les autres axes de pivotement de cette porte pivotante (10a... 10g).

3. Procédé selon la revendication 1, **caractérisé en ce que** le système de distribution d'articles (5) positionne, lors d'une demande de prise en charge des articles (2, 2a, 2b), plusieurs portes coulissantes (10i... 10k) ou portes roulantes (101... 10m) de la cloison (3, 3a, 3b) par paires, de sorte qu'une ouverture (4, 4a, 4b) correspondant à la demande mentionnée est libérée.

4. Procédé selon la revendication 3, **caractérisé en ce que** le système de distribution d'articles (5) positionne, lors d'une demande de prise en charge des articles (2, 2a, 2b), des barres de grilles (58) ou des plaques d'obturation des portes coulissantes (10i... 10k) ou des portes roulantes (101... 10m) de sorte qu'une ouverture (4, 4a, 4b) correspondant à la demande mentionnée est libérée.

5. Station de distribution (1a...1u) pour la répartition d'articles (2, 2a, 2b), comprenant
- une première zone de stockage d'articles (A, A1, A2),
- une zone d'accès client (B, B1, B2),
- une première cloison (3, 3a, 3b) qui sépare la première zone de stockage d'articles (A, A1, A2) et la zone d'accès client (B, B1, B2) entre elles et qui comprend au moins une ouverture refermable (4, 4a, 4b),
- un rayonnage (7, 7a... 7m) avec plusieurs compartiments de rayonnage (6), qui sont accessibles par l'au moins une ouverture refermable (4, 4a, 4b) dans la première cloison (3a) et
- un système de distribution d'articles (5), qui est conçu pour prendre en compte une demande de prise en charge des articles (2, 2a, 2b) par une personne ou une machine (38, 44) correspondant à la personne et pour libérer l'au moins une ouverture refermable (4, 4a, 4b) lorsque la personne mentionnée ou la machine (38, 44) mentionnée est autorisée à prendre en charge les articles (2, 2a, 2b),
**caractérisée en ce que**
- la première cloison (3, 3a, 3b) comprend plusieurs portes pivotantes (10a... 10g) pour la fermeture de l'au moins une ouverture (4, 4a, 4b) et au moins une partie des portes pivotantes (10a... 10g) sont accrochées par paires les unes en face des autres et
- le système de distribution d'articles (5) est conçu pour libérer une ouverture continue (4, 4a, 4b) de taille variable par la libération de plusieurs portes pivotantes (10a... 10g) adjacentes et correspondant à la demande, de manière individuelle et en fonction de la demande de prise en charge des articles (2, 2a, 2b).

6. Station de distribution (1a...1u) selon la revendication 5, **caractérisée en ce que**, à l'ouverture continue (4, 4a, 4b), correspond un compartiment de rayonnage continue (6).

7. Station de distribution (1a... 1u) selon la revendication 5, **caractérisée en ce que** les axes de pivotement des portes pivotantes (10a... 10g) sont orientées de manière verticale, horizontale ou de manière mixte, verticale et horizontale.

8. Station de distribution (1a... 1u) selon la revendication 5, **caractérisée en ce que** la cloison (3, 3a, 3b) comprend plusieurs portes coulissantes (10i... 10k) ou portes roulantes (101... 10m) pour la fermeture de l'au moins une ouverture (4, 4a, 4b), qui sont disposées par paires les unes en face des autres et le système de distribution (5) est conçu pour positionner les portes coulissantes (10i... 10k) / portes roulantes (101... 10m) lors d'une demande de prise en charge des articles (2, 2a, 2b), de sorte qu'au moins une ouverture (4, 4a, 4b) correspondant à la demande mentionnée est libérée.

9. Station de distribution (1a... 1s) selon la revendication 8, **caractérisée en ce que**
i) une paire de portes coulissantes (10i... 10k) / portes roulantes (101... 10m) est prévue, dont la direction de déplacement est orientée de manière horizontale ou verticale et qui sont disposées l'une en face de l'autre par rapport à la direction de déplacement mentionnée ou
ii) une première paire de portes coulissantes (10i... 10k) / portes roulantes (101... 10m) est prévue, dont la direction de déplacement est orientée de manière horizontale et qui sont disposées l'une en face de l'autre par rapport à cette direction de déplacement horizontale et une deuxième paire de portes coulissantes (10i... 10k) / portes roulantes (101... 10m) est prévue, dont la direction de déplacement est orientée de manière verticale et qui sont disposées l'une en face de l'autre par rapport à cette direction de déplacement verticale, dans lequel la première paire et la deuxième paire sont disposées de manière couchée l'une derrière l'autre transversalement par rapport à la direction de déplacement horizontale mentionnée et à la direction de déplacement verticale mentionnée ou
iii) une paire de portes coulissantes (10i... 10k) / portes roulantes (101... 10m) est prévue, dont la direction de déplacement est orientée de manière horizontale ou verticale et qui sont disposées l'une en face de l'autre par rapport à la direction de déplacement horizontale ou verticale et plusieurs portes pivotantes (10a... 10g) sont prévues, dans laquelle les portes coulissantes (10i... 10k) / portes roulantes (101... 10m) et les portes pivotantes (10a... 10g) sont disposées de manière couchée l'une derrière l'autre transversalement par rapport à la direction de déplacement horizontale mentionnée ou à la direction de déplacement verticale mentionnée.

10. Station de distribution (1a... 1u) selon la revendication 8 ou 9, **caractérisée en ce qu'**au moins une porte coulissante (10i... 10k) / porte roulante (101... 10m) comprend des barres de grille (58) ou des plaques d'obturation pouvant être déplacées individuellement, qui sont mobiles vers une position de fermeture dans laquelle elles recouvrent un compartiment de rayonnage (6), et vers une direction d'ouverture dans laquelle elles libèrent un compartiment de rayonnage (6).

11. Station de distribution (1a... 1u) selon l'une des revendications 5 à 10, **caractérisée en ce que** le rayonnage (7, 7a... 7m) est disposée de manière fixe par rapport à la cloison (3, 3a, 3b).

12. Station de distribution (1a... 1u) selon l'une des revendications 5 à 10, **caractérisée en ce que** le rayonnage (7, 7a... 7m) est conçu comme un rayonnage (7, 7a... 7m) mobile par rapport à la cloison (3, 3a, 3b) et peut être déplacé vers une position de transfert dans laquelle au moins un compartiment de rayonnage (6) du rayonnage mobile (7, 7a... 7m) est accessible par l'au moins une ouverture refermable (4, 4a, 4b) dans la première cloison (3a).

13. Station de distribution (1a... 1u) selon la revendication 12, **caractérisée en ce que** le rayonnage (7, 7a... 7m) est chargé et le rayonnage (7, 7a... 7m) chargé est transporté à l'aide d'un chariot élévateur (17a... 17d, 31, 33a, 33b) vers la position de transfert.

14. Station de distribution (1a... 1u) selon la revendication 13, **caractérisée en ce que** le rayonnage (7, 7a... 7m) chargé est transporté à l'aide du chariot élévateur (17a... 17d, 31, 33a, 33b) vers une deuxième zone de stockage d'articles (G1... G5), qui se trouve à l'écart de la première cloison (3, 3a, 3b) mentionnée et de là il est amené vers la position de transfert lorsque le système de distribution (5) prend en compte une demande correspondante de prise en charge des articles (2, 2a, 2b) se trouvant dans le rayonnage (7, 7a... 7m).

15. Station de distribution (1a... 1u) selon la revendication 12, **caractérisée en ce que** le rayonnage mobile (7, 7a... 7m)
- comprend des cloisons de rayonnage (56) et/ou des parois arrière et/ou des fonds de compartiments et/ou des tiges de suspension (52) configurables individuellement ou
- comprend plusieurs modules (51a... 51b) pouvant être reliés entre eux, avec des compartiments de rayonnage (6) de différentes tailles.
